(19) Europäisches Patentamt
European Patent Office
Office européen des brevets

(11) EP 1 602 700 A1

(12) EUROPEAN PATENT APPLICATION

(43) Date of publication:
**07.12.2005 Bulletin 2005/49**

(51) Int Cl.[7]: **C09J 11/06**
// G02B5/20

(21) Application number: **04291362.4**

(22) Date of filing: **01.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **NIPPON SHOKUBAI CO., LTD.**
**Osaka-shi, Osaka 541-0043 (JP)**

(72) Inventors:
- **Tsunemine, Naoki**
**Ibaraki-shi, Osaka 567-0873 (JP)**
- **Yamamoto, Yoshinobu**
**Suita-shi, Osaka 565-0873 (JP)**

(74) Representative: **Hubert, Philippe et al**
**Cabinet Beau de Loménie**
**158, rue de l'Université**
**75340 Paris Cédex 07 (FR)**

# (54) Pressure-sensitive adhesive composition

(57) The present inventors provide a pressure-sensitive adhesive composition in which the near-infrared absorbing dye used is less deteriorated by ultraviolet rays, and which is suited for use in forming pressure-sensitive adhesive layers and the like for sticking together laminar materials forming plasma displays and the like, can put together the functions of the respective layers in the plasma display front face plate in the pressure-sensitive adhesive layer formed, is capable of absorbing near-infrared rays as well as ultraviolet rays and, further, has a color tone-adjusting function.

The invention is directed to a pressure-sensitive adhesive composition which comprises a pressure-sensitive adhesive polymer (A), a near-infrared absorbing dye (B), an ultraviolet absorber (C) and/or a hindered amine light stabilizer (D).

EP 1 602 700 A1

## Description

TECHNICAL FIELD

The present invention relates to a pressure-sensitive adhesive composition. More particularly, it relates to a pressure-sensitive adhesive composition suited for use in forming adhesive layers for combining laminar materials to constitute plasma displays and the like, and to optical filters for plasma displays comprising the pressure-sensitive adhesive composition and plasma display products comprising the same.

PRIOR ART

Pressure-sensitive adhesive compositions comprise a pressure-sensitive adhesive which is sticky at ordinary temperature and can adhere to adherends upon mere application of pressure. They are widely used, for example, in the field of electric and electronic parts, and in other fields. In the case of their use in plasma displays (hereinafter also referred to as "PDPs"), which are used in large-sized thin type televisions, thin type displays and so forth, among such uses of pressure-sensitive adhesive compositions, a number of laminar materials are integrated by adhesive layers formed of a pressure-sensitive adhesive composition.
In such PDPs and the like, a filter is generally disposed in front of each PDP for the purposes of shielding from electromagnetic waves, infrared rays and the like emitted from the PDP, preventing reflection of external light, or changing original PDP coloring to give desired colors, for instance.
Roughly speaking, a PDP is generally composed of a main body (plasma emission part) and a front face plate (screen side to be watched by persons). The front face plate is a multilayer body (laminate) constituted of the following layers (necessary functional layers) in the order from the viewer to the PDP main body:

[Viewer side] Reflection preventing layer/near-infrared absorbing layer/(color tone adjusting layer)/ultraviolet absorbing layer/electromagnetic wave shielding layer [PDP main body]

A pressure-sensitive adhesive is used in adhering (bonding) these layers together. The respective layer materials, lamination order, and lamination method, for instance, are diverse, and figures have been disclosed for various embodiments (cf. e.g. Japanese Kokai Publication 2003-5663 (pages 10, 11), Japanese Kokai Publication 2002-366048 (page 10), Japanese Kokai Publication 2002-268569 (pages 11, 12), Japanese Kokai Publication 2002-323860 (page 11)).
In this way, for example, a film or coating layer having the property of absorbing near-infrared rays, which are heat rays, is used in PDPs, performing an important function. For example, near-infrared rays are emitted from the screen in a PDP or the like, and they may act on a remote-controlled apparatus or instrument or some other electronic device, which is located near the PDP and utilizes near-infrared rays, and cause erroneous operation thereof. Therefore, a near-infrared absorbing layer, which absorbs near-infrared rays and passes visible rays, is formed to shield near-infrared rays emitted from the screen. Such film or coating layer is generally formed using a near-infrared absorbing resin composition. In the manufacture of such PDPs, it is desired that the PDPs be rendered light in weight and that the process of manufacturing the same be simplified to reduce the production cost thereof. Thus, investigations are being actively made to reduce the number of layers in the front face plate for the purpose of cost reduction.
Meanwhile, as a prior art pressure-sensitive adhesive, there has been disclosed a cohesive composition comprising a hydroxyl group-containing cohesive polymer and a crosslinking promoter and further comprising a volatile acid (cf. e.g. Japanese Kokai Publication 2002-241732 (pages 1, 2)). Further, a sheet for display surface protecting film formation which comprises a releasable substrate having at least an ultraviolet absorber-containing surface protecting layer, a pressure-sensitive adhesive layer and a separator in that order (cf. e.g. Japanese Kokai Publication Hei-09-166963 (pages 1, 2)) and a heat ray-shielding pressure-sensitive adhesive comprising an acrylic copolymer polymerized with heat ray-shielding fine particles dispersed (cf. e.g. Japanese Kokai Publication Hei-10-8010 (pages 1, 2)) have been disclosed. However, these pressure-sensitive adhesive compositions are not designed for application to PDPs. Thus, there is room for contrivance for modifying such or other compositions so as to render them applicable as materials for forming pressure-sensitive adhesive layers in electronic apparatus or devices such as PDPs and further for providing such pressure-sensitive adhesive layers with a function as a near-infrared absorbing layer so that the layer structure in PDPs and the like may be simplified and weight reduction and manufacturing process simplification may become possible.
Further, an optical filter provided with a pressure-sensitive adhesive layer or adhesive layer containing a dye having an absorption maximum in the wavelength range of 570 to 600 nm (cf. e.g. Japanese Kokai Publication 2001-228323 (pages 1, 2)), a colored pressure-sensitive adhesive composition (cf. e.g. Japanese Kokai Publication Hei-03-79687 (page 1)), a laser beam-absorbing heat-sensitive adhesive (cf. e.g. Japanese Kokai Publication Hei-09-95657 (pages 1, 2)), and a near-infrared absorbing material (cf. e.g. JP Kokai H09-169849 (pages 1, 2)) have been disclosed. However, for these as well, there is room for contrivance for rendering them applicable as materials for forming pressure-sensitive adhesive layers in electronic apparatus or devices such as PDPs. In addition, these have another problem; when they are applied in forming pressure-sensitive adhesive layers in PDPs and other electronic apparatus or devices, dyes are deteriorated and fail to maintain their near-infrared absorbing capacity for a long period of time.

Therefore, a technology is demanded by which the fundamental performance characteristics required of PDPs and the like can be attained and, further, the number of layers in the front face plate can be reduced for cost reduction.

## SUMMARY OF THE INVENTION

The present invention has been made in view of the above-mentioned state of the art, and it is an object of the present invention to provide a pressure-sensitive adhesive composition in which the near-infrared absorbing dye used is less deteriorated by ultraviolet rays, and which is suited for use in forming pressure-sensitive adhesive layers and the like for sticking together laminar materials forming plasma displays and the like, can put together the functions of the respective layers in the plasma display front face plate in the pressure-sensitive adhesive layer formed, is capable of absorbing near-infrared rays as well as ultraviolet rays and, further, has a color tone-adjusting function.

The present inventors made various investigations concerning pressure-sensitive adhesive compositions and they came to realize that when a near-infrared absorbing dye is incorporated in a pressure-sensitive adhesive composition comprising a pressure-sensitive adhesive polymer as an essential component and the resulting composition is used to form adhesive layers (pressure-sensitive adhesive layers) for bonding together laminar materials forming plasma displays and the like, it might become possible to reduce the layer structure of plasma displays or the like and accomplish weight reduction and manufacturing process simplification. And, the near-infrared absorbing dyes in electronic apparatus or devices such as plasma displays are deteriorated by ultraviolet rays emitted from plasma emission and so on and they are easily deteriorated in pressure-sensitive adhesive polymers, resulting in reductions in their near-infrared absorbing capacity, but they found that the use of an ultraviolet absorber and/or a hindered amine light stabilizer can prevent such deterioration caused by ultraviolet rays and improve the durability of near-infrared absorbing dyes, and an application thereof to pressure-sensitive adhesive layers in electronic apparatus or devices such as plasma displays, makes it possible to satisfactorily maintain the required near-infrared absorbing capacity. Thus, they came to realize that the above object can thus be successfully accomplished.

When pressure-sensitive adhesive layers in plasma displays and the like are formed using the pressure-sensitive adhesive composition of the present invention, they function as near-infrared absorbing layers as well and, therefore, the need to provide a separate near-infrared absorbing layer is lessened, hence the layer structure of plasma displays and the like can be reduced. Thus, while a method comprising putting together the functions of the respective layers constituting the plasma display front face plate in the adhesive layer is useful for reducing the number of layers in the front face plate and thus accomplishing cost reduction, the present invention proposes the use, in such method, of a pressure-sensitive adhesive layer capable of absorbing near-infrared rays as well as ultraviolet rays and thereby makes it possible to reduce the number of layers and further makes it possible for the fundamental performance characteristics required for the plasma display front face plate to be fully manifested. Furthermore, when a color tone-adjusting agent is incorporated therein, such pressure-sensitive adhesive layer can also serve as a material simultaneously having a color tone adjusting function.

The inventors further found that the effects of the present invention can be produced more remarkably when, in such pressure-sensitive adhesive composition, an antioxidant is used and/or the glass transition temperature and/or weight average molecular weight of the pressure-sensitive adhesive polymer is specified to satisfactorily enhance the function as a pressure-sensitive adhesive and/or when, in view of the compatibility of the pressure-sensitive adhesive polymer with the ultraviolet absorber and/or hindered amine light stabilizer and/or the cost thereof, a reactive type and an additive type of the ultraviolet absorber and/or hindered amine light stabilizer are used in combination. These findings have now led to completion of the present invention.

Thus, the present invention provides a pressure-sensitive adhesive composition which comprises a pressure-sensitive adhesive polymer (A), a near-infrared absorbing dye (B), and an ultraviolet absorber (C) and/or a hindered amine light stabilizer (D).

The present invention is further directed to an optical filter for use in plasma displays comprising the above-mentioned pressure-sensitive adhesive composition, or a plasma display comprising the composition.

## DETAILED DESCRIPTION OF THE INVENTION

In the following, the present invention is described in detail.

The pressure-sensitive adhesive composition of the invention contains, as essential constituents, an ultraviolet absorber (C) and/or a hindered amine light stabilizer (D), together with a pressure-sensitive adhesive polymer (A) and a near-infrared absorbing dye (B). In a preferred embodiment, the ultraviolet absorber (C) and the hindered amine light stabilizer (D) are used in combination. In this case, the ultraviolet degradation inhibiting effect on the near-infrared absorbing dye (B) is markedly improved. These essential constituents each may comprise one single species or two or more species. Preferably, the composition further contains an antioxidant (E) and, thus, the combined use of the ultraviolet absorber (C), the hindered amine light stabilizer (D) and an antioxidant (E) is preferred. By this, the effects of the present invention can be produced more satisfactorily.

In the practice of the present invention, the ultraviolet absorber (C) and/or hindered amine light stabilizer (D) may be of the additive type and/or reactive type. The reactive type is preferred, however. More preferred is the use of an reactive type ultraviolet absorber (C). When the reactive type ultraviolet absorber (C) and/or a reactive type hindered amine light stabilizer (D) is used, a preferred mode of embodiment is such that the reactive type ultraviolet absorber (C) and/or reactive type hindered amine light stabilizer (D) is used in the process of production of the pressure-sensitive adhesive polymer (A) for incorporation of the reactive type ultraviolet absorber (C) and/or reactive type hindered amine light stabilizer (D) in the pressure-sensitive adhesive polymer (A), namely the embodiment in which the pressure-sensitive adhesive polymer (A) in a form resulting from reacting with the ultraviolet absorber (C) and/or hindered amine light stabilizer (D). Also in this case, the resulting composition contains the ultraviolet absorber (C) and/or hindered amine light stabilizer (D). When the additive type ultraviolet absorber (C) and/or additive type hindered amine light stabilizer (D) alone is used, compatibility with the pressure-sensitive adhesive polymer (A) may be poor, and when those are used at high addition levels, crystallization (deposition) may be caused in the coat films or pressure-sensitive adhesive layers, thereby transparency may not be obtained in some cases. There is also the possibility of spotting or turbidity appearance in the coat films or pressure-sensitive adhesive layers.

Further, the pressure-sensitive adhesive polymer (A) resulting from reaction with an ultraviolet absorber (C) and/or hindered amine light stabilizer (D) is preferably used in combination with the additive type ultraviolet absorber (C) and/or hindered amine light stabilizer (D). In this case, the compatibility between the pressure-sensitive adhesive polymer (A) and the ultraviolet absorber (C) and/or hindered amine light stabilizer (D) can be improved and, in addition, the combined use is advantageous from the cost viewpoint as compared with the case of using the reactive type ultraviolet absorber (C) and/or hindered amine light stabilizer (D) alone.

The pressure-sensitive adhesive polymer (A) to be used in the practice of the present invention may be any polymer showing adhesiveness or stickiness to adherends upon application of pressure and, for example, a hydroxyl group-containing cohesive polymer is preferable. Suited for use as such polymer are modified polymers such as fluorine-containing polymers, (meth)acrylic polymers, polyester polymers, polyether polymers, alkyd polymers, silicone polymers and polyester-modified acrylic polymers, and polymers obtained by polymerizing a monomer(s) having an ethylenically unsaturated bond. Also usable are rubber polymers such as natural rubbers, styrene-isoprene-styrene (SIS) block copolymers, styrene-butadiene-styrene (SBS) block copolymers and synthetic rubbers. Among those, (meth)acrylic polymers are preferred in view of their weathering resistance and their easily adjustable tackiness. More preferred are acrylic polymers.

The pressure-sensitive adhesive polymer (A) can be obtained by polymerizing a monomer component comprising one or two or more monomers. The monomer species to be contained in the monomer component and proportions thereof can be appropriately selected according to the physical properties desired for the pressure-sensitive adhesive polymer (A) and, in the case of (meth)acrylic polymers, for instance, those comprising, as a main component, a (meth)acrylate ester having, an alkyl group containing 4 to 12 carbon atoms on the side chain, are preferred.

As the (meth)acrylate having an alkyl group containing 4 to 12 carbon atoms on the side chain, there may be mentioned methyl (meth)acrylate, ethyl (meth)acrylate, n-butyl (meth)acrylate, isobutyl (meth)acrylate, t-butyl (meth) acrylate, 2-ethylhexyl (meth)acrylate, cyclohexyl (meth)acrylate, heptyl (meth)acrylate, octyl (meth)acrylate, isooctyl (meth)acrylate, nonyl (meth)acrylate, isononyl (meth)acrylate, decyl (meth)acrylate, dodecyl (meth)acrylate, amyl (meth)acrylate, n-lauryl (meth)acrylate, benzyl (meth)acrylate, isobornyl (meth)acrylate, and the like.

The above-mentioned monomer component may contain a further monomer (other monomer) other than the above-mentioned (meth)acrylate(s) for adjusting the Tg and/or polarity of the pressure-sensitive adhesive polymer (A) obtained. Preferred as the other monomer are the following monomers:

Vinyl esters such as vinyl acetate and vinyl butyrate;
fluorine atom-containing unsaturated monomers such as trifluoroethyl (meth)acrylate and tetrafluoropropyl (meth) acrylate; vinyl ethers such as vinyl methyl ether and vinyl ethyl ether; silicon atom-containing unsaturated monomers such as γ-methacryloxypropyltrimethoxysilane;
epoxy group-containing unsaturated monomers such as glycidyl (meth)acrylate and α-methylglycidyl (meth)acrylate; polyfunctional unsaturated monomers such as ethylene glycol diacrylate, neopentyl glycol diacrylate and polypropylene glycol diacrylate.

Aromatic unsaturated monomers such as styrene, α-methylstyrene and vinyltoluene; hydrocarbon unsaturated monomers such as butadiene and isoprene; halogen atom-containing unsaturated monomers such as chloroprene and vinyl chloride; nitrogen atom-containing unsaturated monomers such as N,N'-dimethylaminoethyl (meth)acrylate, (meth)acrylamide, N-isopropylacrylamide, N-butoxymethylacrylamide, N-phenylmaleimide, N-cyclohexylmaleimide, N-vinylpyridine, N-vinylimidazole, N-vinylpyrrolidone, N-dimethylacrylamide and isopropenyloxazoline; unsaturated cyano compounds such as (meth)acrylonitrile.

In the above-mentioned monomer component, a monomer having a functional group such as a hydroxyl or carboxyl group may also be used as a crosslinking point (crosslinkable monomer) or for adjusting the Tg and/or polarity. Suited for use as such monomer are the following:

Hydroxyl group-containing monomers such as 2-hydroxyethyl (meth)acrylate, hydroxypropyl (meth)acrylate, 4-hydroxybutyl (meth)acrylate, caprolactone-modified hydroxy(meth)acrylate, methyl α-(hydroxymethyl)acrylate, ethyl α-(hydroxymethyl)acrylate, and mono(meth)acrylates of phthalic acid- and propylene glycol-derived polyester diols; acidic functional group-containing unsaturated monomers such as (meth)acrylic acid, maleic acid, maleic anhydride, itaconic acid, and carboxyl-terminated caprolactone-modified (meth)acrylates.

In cases where a reactive type ultraviolet absorber (C) and/or hindered amine light stabilizer (D) is used as a monomer for forming the pressure-sensitive adhesive polymer (A), the following monomers are suited for use:

Reactive benzotriazole type ultraviolet absorbing monomers (disclosed in Japanese Kokai Publication Hei-08-151415, for instance) such as 2-[2'-hydroxy-5'-(meth)acryloyloxyethylphenyl]-2H-benzotriazole, 2-[2'-hydroxy-5'-(meth)acryloyloxypropylphenyl]-2H-benzotriazole and the commercial product RUVA-93 (trademark, product of Otsuka Chemical Co., Ltd.); reactive benzophenone type ultraviolet absorbing monomers such as 2-hydroxy-4-methacryloxybenzophenone and 2-hydroxy-4-(2-hydroxy-3-methacryloyloxy)propoxybenzophenone; reactive triazine type ultraviolet absorbing monomers; 4-(meth)acryloyloxy-2,2,6,6-tetramethylpiperidine, 4-(meth)acryloyloxy-1,2,2,6,6-pentamethylpiperidine, the commercial products Adekastab LA-82 and LA-87 (both being trademarks, products of Asahi Denka Kogyo), the commercial products FA-711MM and FA-712HM (both being trademarks, products of Hitachi Chemical Co., Ltd.), and like reactive type ultraviolet stabilizing monomers (disclosed in Japanese Kokai Publication Hei-01-261409, for instance).

As for the polymerization method for polymerizing the above-mentioned monomer composition, the polymerization methods known in the prior art, for example the solution polymerization, emulsion polymerization, suspension polymerization and bulk polymerization methods, can be employed. In view of the simplicity and ease of production procedures, the solution polymerization method is preferably employed. The solvent usable when the solution polymerization method is employed may be adequately selected from among those which are substantially inert to the pressure-sensitive adhesive polymer (A) and can dissolve or disperse the pressure-sensitive adhesive polymer (A). Thus, suited for use are organic solvents, for example aromatic hydrocarbon solvents such as toluene and xylene; ester solvents such as ethyl acetate and butyl acetate; ketone solvents such as acetone, methyl ethyl ketone and methyl amyl ketone; alcohol solvents such as methanol, ethanol, n-propyl alcohol and isopropyl alcohol; alkylene glycol monoalkyl ether solvents such as ethylene glycol monomethyl ether (methyl cellosolve), ethylene glycol monoethyl ether (ethyl cellosolve), ethylene glycol monobutyl ether (butyl cellosolve) and propylene glycol monomethyl ether; and other solvents such as tetrahydrofuran, N,N-dimethylformamide, dimethylacetamide, dioxane and chloroform; and water. These may be used singly or two or more of them may be used in combination. In cases where the pressure-sensitive adhesive composition contains a polyisocyanate compound, which is to be mentioned later herein, those solvents showing activity against the isocyanato group, such as alcohol solvents, alkylene glycol monoalkyl ether solvents and water, are not preferred in most cases.

The above-mentioned solvent is used preferably in a solvent proportion not exceeding 95% by mass relative to the pressure-sensitive adhesive composition. More preferably, the proportion is not less than 10% by mass. Still more preferably, it is not less than 15% by mass but not more than 90% by mass.

In polymerizing the above-mentioned monomer composition, a polymerization initiator can be used. The polymerization initiator to be used may be any of the conventional radical polymerization initiators, including azo type initiators such as 2,2'-azobis(2-methylbutyronitrile) and 2,2'-azobisisobutyronitrile; and peroxide type initiators such as t-butyl peroxy-2-ethylhexanoate, benzoyl peroxide, di-t-butyl peroxide and 1,1-bis(t-butylperoxy)-3,3,5-trimethylcyclohexane, among others. The level of addition of the polymerization initiator is preferably 0.05 to 20% by mass, more preferably 0.1 to 15% by mass, relative to the total mass (100% by mass) of the monomer components.

In polymerizing the above-mentioned monomer composition, a chain transfer agent or a polymerization regulator may be used, if necessary, for the purpose of molecular weight adjustment. There may be mentioned, for example, alkylmercaptans such as n-butylmercaptan, n-hexylmercaptan and dodecylmercaptan; other mercaptans such as thioglycolic acid, mercaptopropionic acid, thioglycerol, 2-mercaptoethanol; α-methylstyrene dimer, disulfides, isopropyl alcohol, dioxane, carbon tetrachloride, chloroform and so forth. These may be used singly or two or more of them may be used in combination. The level of addition of these is preferably 0.01 to 10% by mass relative to the total mass (100% by mass) of the monomer components.

The reaction temperature in polymerizing the above-mentioned monomer component is preferably from room temperature to 200°C, more preferably 40 to 140°C. The reaction time may be appropriately selected according to the reaction temperature, monomer composition and polymerization initiator species, among others, so that the polymerization reaction may be driven to completion.

The pressure-sensitive adhesive polymer (A) to be used in the practice of the present invention preferably has a glass transition temperature of -80 to -20°C and, thus, the polymer-forming monomer component, among others, is preferably selected so that the glass transition temperature of the polymer may fall within the above range. When the glass transition temperature is below -80°C, the high-temperature cohesive strength tends to lower and, when it exceeds -20°C, no pressure-sensitive adhesiveness may be manifested at ordinary temperature. In either case, there is the possibility of failure in attaining good stickiness. The glass transition temperature Tg can be easily calculated according to the formula given below based on data concerning the glass transition temperatures Tg (K) of various homopolymers as described in POLYMER HANDBOOK, third edition (published by John Wiley & Sons, Inc.). It can also be determined using a DSC (differential scanning colorimeter) or DTA (differential thermal analyzer).

$$1/Tg\ (K) = w_1/Tg_1 + w_2/Tg_2 + ... + w_n/Tg_n$$

In the formula, $w_n$ is the mass fraction of the each monomer, and $Tg_n$ is the Tg (K) of the homopolymer of that monomer. As such Tg, the value given in POLYMER HANDBOOK (3rd Ed., J. Brandrup and E. H. Immergut, WILEY INTERSCIENCE) or the value given in a generally published document may be used.

The above-mentioned pressure-sensitive adhesive polymer (A) preferably has a weight average molecular weight (Mw) of not less than 250,000 but not more than 2,000,000. When the Mw is less than 250,000, it becomes difficult to improve the holding power (cohesive strength) even when crosslinking is carried out and, in addition, the removability lowers, hence it may become difficult to balance various physical properties against one another. When it exceeds 2,000,000, the polymerization stability may possibly worsen. More preferably, it is not less than 400,000 but not more than 1,500,000. The weight average molecular weight is the polystyrene-equivalent value measured by gel permeation chromatography (GPC).

The above-mentioned pressure-sensitive adhesive polymer (A) preferably has an acid value or hydroxyl value falling within a specific range. The solid matter acid value of the pressure-sensitive adhesive polymer (A) is preferably not more than 30 mg KOH/g, more preferably not more than 15 mg KOH/g, still more preferably not more than 8 mg KOH/g. When the acid value is excessively high, the near-infrared absorbing dyes may be deteriorated, or the polymer may react with the reactive type ultraviolet absorber (C) or hindered amine light stabilizer (D) and thus lose its stickiness. The hydroxyl value of the pressure-sensitive adhesive polymer (A) is preferably not more than 10 mg KOH/g, more preferably not more than 5 mg KOH/g, still more preferably not more than 2.5 mg KOH/g. A higher hydroxyl value may lead to deterioration of the near-infrared absorbing dyes.

The hydroxyl value is the number of milligrams of potassium hydroxide required for neutralizing the hydroxyl group-bound acetic acid upon acetylation of 1 g of a sample. It may be determined by the method described in JIS-K-0070, or calculated as a theoretical value by calculation based on the charge composition. The acid value is the number of milligrams of potassium hydroxide required for neutralization of the acid contained in 1 g of a sample, and may be determined by the method described in JIS K 0070, or calculated by calculation based on the charge composition.

The above-mentioned pressure-sensitive adhesive polymer (A) is used preferably in an amount of not less than 3% by mass but not more than 99.9% by mass relative to 100% by mass of the pressure-sensitive adhesive composition. When the amount is less than 3% by mass, problems may arise, for example no sufficient stickiness can be obtained and the applicability will be poor. At levels exceeding 99.9%, problems may also arise, for example the applicability will be poor, the viscosity will be high, resulting in poor handleability, the dye will be hardly miscible, and no satisfactory pot life will be obtained. A more preferred is not less than 10% by mass but not more than 90% by mass, still more preferably not less than 20% by mass but not more than 85% by mass.

In the practice of the present invention, dyes having a maximum absorption wavelength within the range of 780-1200 nm are suited for use as the near-infrared absorbing dye (B). Two or more such dyes differing in near-infrared absorption characteristics may be used in combination. In this case, the near-infrared absorbing effect may possibly be improved. The term "near-infrared absorption characteristics" as used herein has the same meaning as "heat ray absorption characteristics".

Preferably used as the near-infrared absorbing dye in the practice of the present invention is a dye capable of being dissolved in organic solvents, namely an organic solvent-soluble, near-infrared absorbing dye. When the dye

is soluble in organic solvents, it can be easily dissolved in a pressure-sensitive adhesive polymer (A), hence coating agent preparation is facilitated. When, conversely, the dye is poor in solubility, it is difficult to mix up the dye and the pressure-sensitive adhesive polymer (A), hence coating agent preparation also becomes difficult. As regards the solubility in an organic solvent, it is suitable to use a near-infrared absorbing dye having a solubility of not less than 0.01% by mass in 100% by mass of the organic solvent. The organic solvent referred to above with respect to the solubility in organic solvent is not particularly restricted but may be one of or a combination of two or more of aromatic solvents such as toluene and xylene; alcohol solvents such as iso-propyl alcohol, n-butyl alcohol, propylene glycol methyl ether and dipropylene glycol methyl ether; ester solvents such as butyl acetate, ethyl acetate and cellosolve acetate; ketone solvents such as acetone, methyl ethyl ketone and methyl isobutyl ketone; dimethylformamide and the like.

The above-mentioned near-infrared absorbing dye, there may be mentioned, phthalocyanine-based dyes, naphthalocyanine-based dyes, anthraquinone-based dyes, naphthoquinone-based dyes, cyanine-based dyes, aluminum-based dyes, immonium-based dyes, polymethine-based dyes, aromatic dithiol-based dyes, and aromatic diol-based dyes, among others. As specific commercial products, there may be mentioned Nippon Shokubai's "EX Color" series, US Epolin's "Epolight" series, and Nippon Kayaku's "KAYASORB" series. Among them, phthalocyanine dyes are preferably used because of their excellence in near-infrared absorbing capacity and in organic solvent solubility.

The phthalocyanine-based so referred to herein means phthalocyanine, phthalocyanine complexes, and those derivatives of phthalocyanine or phthalocyanine complexes which have, on a phthalocyanine skeleton benzene ring, one or more substituents selected from among OR, SR, NHR and NRR'. R and R' are the same or different and each represents a phenyl group, an alkyl group having 1 to 20 carbon atoms or an aralkyl group having 7 to 20 carbon atoms, which may optionally have a substituent. Preferred are those phthalocyanines in which one of substituents is substituted by NHR.

Preferred as the near-infrared absorbing dye to be used in the practice of the present invention are compounds represented by the following general formula (1):

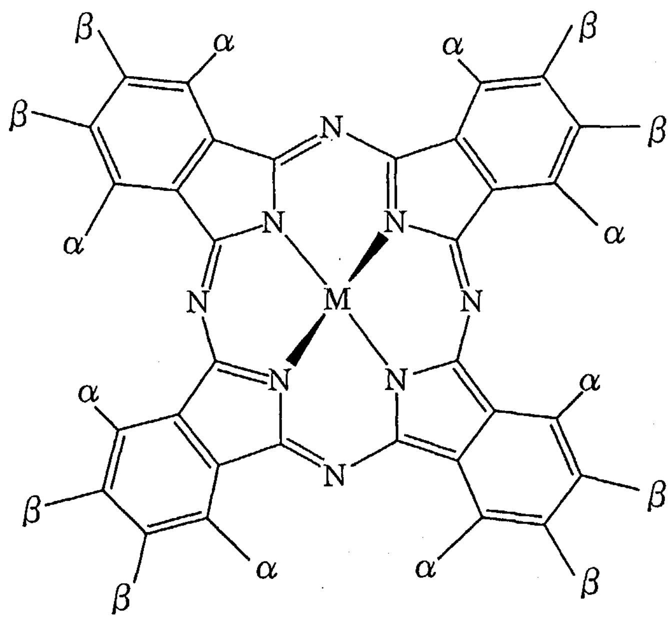

(1)

(in the formula, plurality of $\alpha$ are the same or different and each represents $SR^1$, $OR^2$, $NHR^3$ or a halogen atom but it is essential for at least one of them to be $NHR^3$; $R^1$, $R^2$ and $R^3$ are the same or different and each represents a phenyl group, an alkyl group having 1 to 20 carbon atoms or an aralkyl group having 7 to 20 carbon atoms, which may optionally have one or more substituents; plurality of $\beta$ are the same or different and each represents $SR^1$, $OR^2$ or a halogen atom but it is essential for at least one of them to be $SR^1$ or $OR^2$; it is essential at least one of pluralities of $\alpha$ and $\beta$ to be a halogen atom or $OR^2$; and M represents a non-metal, a metal, a metal oxide or a metal halide.) They allow the effects of the present invention to be produced to a fuller extent.

Referring to the above general formula (1), the alkyl group having 1 to 20 carbon atoms includes straight or branched alkyl groups such as methyl, ethyl, propyl, isopropyl, n-butyl, isobutyl, sec-butyl, tert-butyl, n-pentyl, isopentyl, neopentyl, 1,2-dimethylpropyl, n-hexyl, 1,3-dimethylbutyl, 1-isopropylpropyl, 1,2-dimethylbutyl, n-heptyl, 1,4-dimethylpentyl, 2-methyl-1-isopropylpropyl, 1-ethyl-3-methylbutyl, n-octyl and 2-ethylhexyl; cyclic alkyl groups such as cyclohexyl. The aralkyl group having 7 to 20 carbon atoms includes benzyl and phenethyl. The halogen atom includes a fluorine atom, a chlorine atom, a bromine atom and an iodine atom, among which a fluorine atom is preferred.

Referring to $R^1$, $R^2$ and $R^3$, the phenyl group, alkyl group having 1 to 20 carbon atoms or aralkyl group having 7 to 20 carbon atoms may have one or more substituent(s). As such substituent(s), there may be mentioned, for example, halogen atoms, acyl groups, alkyl groups, alkoxy groups, haloalkoxy groups, a nitro group, an amino group, alkylamino groups, alkylcarbonylamino groups, arylamino groups, arylcarbonylamino groups, a carbonyl group, and alkoxycarbonyl groups.

Referring to M in the above-mentioned general formula (1), non-metal means that there are atoms other than metal, for example two hydrogen atoms. More specifically, it means a structure such that a hydrogen atom is bound to each of the two opposing nitrogen atoms, each of which may have a substituent, occurring in the central portion of the phthalocyanine structure. As the metal, there may be mentioned, for example, iron, magnesium, nickel, cobalt, copper, palladium, zinc, vanadium, titanium, indium, and tin. As the metal oxide, there may be mentioned, for example, titanyl and vanadyl. As the metal halide, there may be mentioned, for example, aluminum chloride, indium chloride, germanium chloride, tin chloride, and silicon chloride. Preferred as M are metals, metal oxides, or metal halides. As specific examples, there may be mentioned, nickel, cobalt, copper, zinc, iron, vanadyl, and dichlorotin. More preferred are zinc, cobalt, vanadyl, and dichlorotin.

In preferred forms of the compound represented by the general formula (1), four to eight out of the eight βs are the same or different and each represents $SR^1$ or $OR^2$. More preferably, all the eight βs are the same or different and each represents $SR^1$ or $OR^2$. As such near-infrared absorbing dyes, there may be mentioned, for example, those phthalocyanine compounds symbolically referred to as $ZnPc(PhS)_8(PHNH)_3F_5$, $ZnPc(PhS)_8(PhNH)_4F_4$, $ZnPc(PhS)_8(PhNH)_5F_3$, $ZnPc(PhS)_8(PhCH_2NH)_4F_4$, $ZnPc(PhS)_8(PhCH_2NH)_5F_3$, $ZnPc(PhS)_8(PhCH_2NH)_6F_2$, $CuPc(PhS)_8(PhNH)_7F$, $CuPc(PhS)_8(PhNH)_6F_2$, $CuPc(PhS)_8(PhNH)_5F_3$, $VOPc(PhO)_8(PhCH_2NH)_5F_3$, $VOPc(PhO)_8(PhCH_2NH)_6F_2$, $VOPc(PhO)_8(PhCH_2NH)_8$, $VOPc(PhS)_8(PhCH_2NH)_8$, $VOPc(2,5\text{-}Cl_2PhO)_8\{2,6\text{-}(CH_3)_2PhO\}_4\{Ph(CH_3)CHNH\}_3F$, $VOPc(2,5\text{-}Cl_2PhO)_8\{2,6\text{-}(CH_3)_2PhO\}_4(PhCH_2NH)_4$, $CuPc(2,5\text{-}Cl_2PhO)_8(2,6\text{-}(CH_3)_2PhO\}_4(PhCH_2NH)_4$, $CuPc(PhS)_8\{2,6\text{-}(CH_3)_2PhO\}_4(PhCH_2NH)_4$, $VOPc(4\text{-}CNPhO)_8\{2,6\text{-}Br_2\text{-}4\text{-}(CH_3)PhO\}_4\{Ph(CH_3)CHNH\}_4$, and $ZnPc(2,6\text{-}Cl_2PhO)_8\{2,6\text{-}Br_2\text{-}4\text{-}(CH_3)PhO\}_4\{Ph(CH_3)CHNH\}_3F$. Among those compounds, there may particularly be mentioned the compounds in which four out of the eight αs are the same or different and each represents $OR^2$ or a halogen atom and which are symbolically referred to as $ZnPc(PhS)_8(PhNH)_3F_5$, $ZnPc(PhS)_8(PhNH)_4F_4$, $ZnPC(PhS)_8(PhCH_2NH)_4F_4$, $VOPc(2,5\text{-}Cl_2PhO)_8\{2,6\text{-}(CH_3)_2PhO\}_4\{Ph(CH_3)CHNH\}_3F$, $VOPc(2,5\text{-}Cl_2PhO)_8\{2,6\text{-}(CH_3)_2PhO\}_4(PhCH_2NH)_4$, $CuPc(2,5\text{-}Cl_2PhO)_8\{2,6\text{-}(CH_3)_2PhO\}_4(PhCH_2NH)_4$, $CuPc(PhS)_8\{2,6\text{-}(CH_3)_2PhO\}_4(PhCH_2NH)_4$, $VOPc(4\text{-}CNPhO)_8\{2,6\text{-}Br_2\text{-}4\text{-}(CH_3)PhO\}_4\{Ph(CH_3)CHNH\}_4$, and $ZnPc(2,6\text{-}Cl_2PhO)_8\{2,6\text{-}Br_2\text{-}4\text{-}(CH_3)PhO\}_4(Ph(CH_3)CHNH\}_3F$. In the above-mentioned abbreviations for compound names, Pc represents the phthalocyanine nucleus, and Pc is followed by the eight susbtituents in the positions β, further followed by the eight substituents in the positions α. In the above-mentioned Ph represents a phenyl group. More specifically, the above-mentioned abbreviations each denotes central metal atom:Pc:eight substituents at β positions:eight substituents at α positions. In the case of $ZnPc(PhS)_8(PhNH)_3F_5$, for example, the above scheme is illustrated by the underlined parts of $\underline{Zn}\ \underline{Pc}\ \underline{(PhS)_8}\ \underline{(PhNH)_3F_5}$.

As the above-mentioned infrared absorbing dye, a phthalocyanine dye which has a maximum absorption wavelength in a long wavelength region (920 to 1050 nm) compared to that of the hitherto known phthalocyanine dye and has high degree of transparency of a visible ray can be used, and it is preferable embodiment of the present invention to use such a phthalocyanine dye. The above-mentioned phthalocyanine dye suitably includes a compound represented by the following general formula (2):

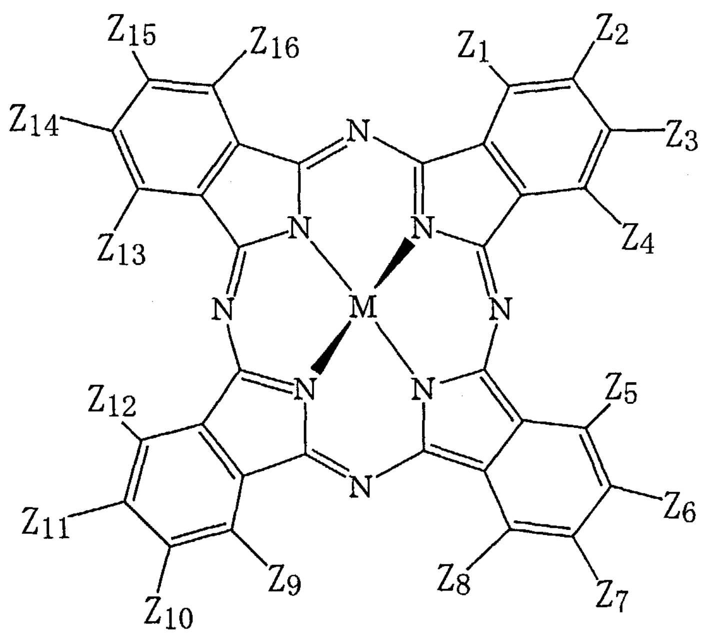

(2)

(in the formula, $Z_2$, $Z_3$, $Z_6$, $Z_7$, $Z_{10}$, $Z_{11}$, $Z_{19}$ and $Z_{15}$ are the same or different and each represents $SR^1$, $SR^2$, $OR^3$ or a halogen atom; $Z_1$, $Z_4$, $Z_5$, $Z_8$, $Z_9$, $Z_{12}$, $Z_{13}$ and $Z_{16}$ are the same or different and each represents $NHR^4$, $NHR^5$, $SR^1$, $SR^2$, $OR^3$ or a halogen atom; $R^1$ represents a phenyl group which may have one or more substituents, an aralkyl group which may have one or more substituents or a $C_1$-$C_{20}$ alkyl group which may have one or more substituents; $R^2$ represents a phenyl group which may have one or more $C_1$-$C_{20}$ alkoxyl groups; R3 and R4 are the same or different and each represents a phenyl group which may have one or more substituents, an aralkyl group which may have one or more substituents or a $C_1$-$C_{20}$ alkyl group which may have one or more substituents; $R^5$ represents a $C_1$-$C_{20}$ alkyl group which may have one or more substituents; M represents a non-metal, a metal, a metal oxide or a metal halide; but it is essential for at least one of $Z_2$, $2_3$, $Z_6$, $Z_7$, $Z_{10}$, $Z_{11}$, $Z_{14}$ and $Z_{15}$ to be $SR_2$; it is essential for at lease one of $Z_1$, $Z_4$, $Z_5$, $Z_8$, $Z_9$, $Z_{12}$, $Z_{13}$ and $Z_{16}$ to be $NHR^5$ and at least four of them to be $OR^3$; and plurality of $R^1$, $R^2$, $R^3$, $R^4$ and $R^5$ may be the same or different.)

The compound represented by the above-mentioned general formula (2) can selectively absorb the near-infrared ray having a wavelength of exceeding 920 nm and not more than 1050 nm. When this compound is used as the infrared absorbing dye, a degree of transparency of the visible ray of the solution in which the concentration of the above-mentioned compound is adjusted so as that the minimum value of degree of transparency of the near-infrared ray having the wavelength of exceeding 920 nm and not more than 1050 nm be 5 to 6% can be not less than 65%, and such embodiment is preferable. More preferably, the degree of transparency of the visible ray is not less than 70%. Such dye that has high degree of transparency of the visible ray, is excellent in the near-infrared absorbing capacity, has high block efficiency of the near-infrared ray and is excellent in solubility, heat-resistance, light-proof property and the like can be suitably used for a heat ray-shielding material, a near-infrared absorbing filter e.g. a filter for a plasma display, a near-infrared absorber for a non-contact fixing toner such as flash fixing or for a heat reserving fiber. For example, when it is used as a filter for plasma display, the near-infrared ray having a longer wavelength, which has been difficult to be shielded, can be effectively absorbed so that the error performance of the remote controller and the like can be more effectively prevented; moreover, because of the high degree of transparency of not less than 65%, more preferably not less than 70%, clear image can be provided.

In the above-mentioned general formula (2), M represents a non-metal, a metal, a metal oxide or a metal halide; and the non-metal and the metal include the same ones as the non-metal and the metal referring to M of the above-mentioned general formula (1). As the metal oxide, there may be mentioned, for example, titanyl and vanadyl. As the metal halide, there may be mentioned, for example, aluminum chloride, indium chloride, germanium chloride, tin (II) chloride, tin (IV) chloride, and silicon chloride. Preferred as M are metals, metal oxides, or metal halides. As specific examples, there may be mentioned copper, zinc, cobalt, nickel, iron, vanadyl, titanyl, indium chloride and tin (II) chloride. More preferred are copper, vanadyl and zinc.

In the above-mentioned general formula (2), at least four of $Z_2$, $Z_3$, $Z_6$, $Z_7$, $Z_{10}$, $Z_{11}$, $Z_{14}$ and $Z_{15}$ (these may be referred to as substituents which substitutes eight β-positions of a phthalocyanine core) are preferably $SR^2$. More preferably, all eight of them are $SR^2$. When any one or more of them are halogen atoms, a fluorine atom or chlorine

atom is preferred as the halogen atom. More preferred is a fluorine atom. When an electron donative group such as $SR^2$ is contained, the absorption wavelength becomes longer, the degree of transparency becomes excellent, and selective absorbing capacity of the near-infrared ray having the wavelength of exceeding 920 nm and not more than 1050 nm is provided. By carrying out the substitution with an amino compound following the substitution to $SR^2$ in the production process, a phthalocyanine compound which can be easily controlled in the substituting position and has excellent compatibility with the resin can be obtained.

In the above-mentioned general formula (2), regarding $Z_1$, $Z_4$, $Z_5$, $Z_8$, $Z_9$, $Z_{12}$, $Z_{13}$ and $Z_{16}$ (these may be referred to as substituents which substitutes eight $\alpha$-positions of a phthalocyanine core), it is preferred that three to four of them are $NHR^5$ and four to five of them are substituted by $OR^3$. More preferably, four of them are $NHR^5$ and four of them are substituted by $OR^3$, still more preferably, two to three of them are $NHR^5$ and four of them are $OR^3$ and remained one to two are halogen atoms. As the halogen atom, a fluorine atom or a chlorine atom is preferred. More preferably, one to two of them are all fluorine atoms.

When two to three out of eight $\alpha$-positions of the phthalocyanine core are $NHR^5$, four of them are $OR^3$ and remained one to two are all fluorine atoms in the above-mentioned general formula (2), it becomes possible to have such functional effects that the absorption wavelength becomes longer, the compatibility with the resin is excellent compare to the compound which contains the hydrogen atom(s) or other halogen atom(s) in $\alpha$-positions of the phthalocyanine core, and light-proof property, heat-resistance or the like is improved. Moreover, the production of the compound can be carried out easily and conveniently as well as with low cost.

Regarding $R^1$ through $R^5$ of the above-mentioned general formula (2), the aralkyl group of $R^1$, $R^3$ or $R^4$ preferably includes benzyl, phenethyl and diphenylmethyl groups.

The alkyl group of $R^1$, $R^3$, $R^4$ or $R^5$ is preferably a straight, branched or cyclic alkyl groups having 1 to 8 carbon atoms, and preferably includes methyl, ethyl, n-propyl, isopropyl, n-butyl, isobutyl, sec-butyl, tert-butyl, n-pentyl, isopentyl, neopentyl, 1,2-dimethylpropyl, n-hexyl, cyclohexyl, 1,3-dimethylbutyl, 1-isopropylpropyl, 1,2-dimethylbutyl, n-heptyl, 1,4-dimethylpentyl, 2-methyl-1-isopropylpropyl, 1-ethyl-3-methylbutyl, n-octyl and 2-ethylhexyl group. Among these, methyl and ethyl group are more preferred.

The alkoxyl group of above-mentioned $R^2$ may preferably be a straight, branched or cyclic alkoxyl group having 1 to 8 carbon atoms, and methoxy, ethoxy, n-propoxy, isopropoxy, n-butoxy, isobutoxy, sec-butoxy, tert-butoxy, n-pentyloxy, isopentyloxy, neopentyloxy, 1,2-dimethylpropoxy, n-hexyloxy, cyclohexyloxy, 1,3-dimethylbutoxy, 1-isopropylpropoxy, 1,2-dimethylbutoxy, n-heptyloxy, 1,4-dimethylpentyloxy, 2-methyl-1-isopropylpropoxy, 1-ethyl-3-methylbutoxy, n-octyloxy and 2-ethylhexyloxy groups are preferred. Among these, methoxy and ethoxy group are more preferred because the effect for enhancing the selective absorbing capacity of near-infrared ray having the wavelength of exceeding 920 nm and not more than 1050 nm is specifically high. Still more preferred is methoxy group. $SR^2$ preferably includes phenylthio, 2-methoxyphenylthio and 4-methoxyphenylthio group. These alkoxyl groups can substitute one to five positions of the phenyl group and when plurality of alkoxyl group substitute, these may be the same species or different species, however, one substitution is preferable. The positions of the phenyl group to be substituted with these alkoxyl groups are not specifically limited, however, 2- or 4-position is preferred.

The above-mentioned non-substituted alkyl group having 1 to 20 carbon atoms of $R^1$, $R^3$ or $R^4$ includes a straight, branched or cyclic alkyl group having 1 to 8 carbon atoms and specifically includes the same alkyl groups referring to the $R^1$, $R^3$, $R^4$ and $R^5$, however, among these, methyl, ethyl, n-propyl, isopropyl and n-butyl groups are preferred.

The substituent of the alkyl group includes, for example, halogen atoms, alkoxyl groups, hydroxyalkoxyl groups, alkoxyalkoxyl groups, haloalkoxyl groups, a nitro group, an amino group, alkylamino groups, alkoxycarbonyl groups, alkylaminocarbonyl groups and alkoxysulfonyl groups. In case plurality of these substituents substitute, substituents may be the same species or different species.

When the above-mentioned phenyl group or aralkyl group of $R^1$, $R^3$ or $R^4$ has a substituent, the substituent includes for example, halogen atoms, acyl groups, alkyl groups, phenyl groups, alkoxyl groups, haloalkyl groups, haloalkoxyl groups, a nitro group, an amino group, alkylamino groups, alkylcarbonylamino groups, arylamino groups, arylcarbonylamino groups, carbonyl groups, alkoxycarbonyl groups, alkylaminocarbonyl groups, alkoxysulfonyl groups, alkylthio groups, carbamoyl groups, aryloxycarbonyl groups, oxyalkylether groups and cyano groups. One to five of these substituents can substitute the phenyl or aralkyl group. In case plurality of these substituents substitute, substituents may be the same species or different species.

When a halogen atom substitutes the above-mentioned phenyl group or aralkyl group, the halogen atom is preferably a chlorine atom.

The above-mentioned acyl group includes acetyl, ethylcarbonyl, propylcarbonyl, butylcarbonyl, pentylcarbonyl, hexylcarbonyl, benzoyl, p-t-butylbenzoyl, and the like groups, ethylcarbonyl is preferred among these.

The above-mentioned haloalkyl groups are the substituents in which a portion of the alkyl group having 1 to 20 carbon atoms is halogenated, and preferably include one in which a portion of a straight, branched or cyclic alkyl group having 1 to 8 carbon atoms is halogenated; and chloromethyl, bromomethyl, trifluoromethyl, chloroethyl,

2,2,2-trichloroethyl, bromoethyl, chloropropyl, bromopropyl and the like groups are preferred.

The above-mentioned haloalkoxyl groups are the substituents in which a portion of the alkoxyl group having 1 to 20 carbon atoms is halogenated, and preferably include one in which a portion of a straight, branched or cyclic alkokoxyl group having 1 to 8 carbon atoms is halogenated; and chloromethoxy, bromomethoxy, trifluoromethoxy, chloroethoxy, 2,2,2-trichloroethoxy, bromoethoxy, chloropropoxy, bromopropoxy and the like groups are preferred.

The above-mentioned alkylamino groups are the substituents having a $C_1$-$C_{20}$ alkyl moiety, and preferably include one having $C_1$-$C_8$ alkyl moiety; and methylamino, ethylamino, n-propylamino, n-butylamino, sec-butylamino, n-pentylamino, n-hexylamino, n-heptylamino, n-octylamino, 2-ethylhexylamino and the like groups are preferred. Among these, methylamino, ethyamino, n-propylamino and n-butylamino groups are more preferred.

The above-mentioned alkoxycarbonyl groups are a $C_1$-$C_8$ group which may have a hetero atom(s) in an alkyl moiety of the alkoxyl groups, and preferably include $C_1$-$C_5$ alkoxycarbonyl and $C_3$-$C_8$, preferably $C_5$-$C_8$, cyclic alkoxycarbonyl which may have a hetero atom. Specifically, there may preferably be mentioned methoxycarbonyl, ethoxycarbonyl, n-propoxycarbonyl, isopropoxycarbonyl, n-butoxycarbonyl, isobutoxycarbonyl, sec-butoxycarbonyl, tert-butoxycarbonyl and the like groups. Among these, methoxycarbonyl and ethoxycarbonyl groups are more preferred.

The phthalocyanine compound represented by the above-mentioned general formula (2) is one having a substituent represented by $NHR^5$ at $\alpha$-position of the phthalocyanine core. The $NHR^5$ is an amino group having a substituent which has strong electron donative property and is bulky, and by existing at $\alpha$-position of the phthalocyanine core, the selective absorbing capacity of the near-infrared ray having the wavelength of exceeding 920 nm and not more than 1050 nm can be enhanced, and the compatibility with the resin can be improved.

In case that $R^5$ in above-mentioned $NHR^5$ is a non-substituted alkyl group having 1 to 20 carbon atoms, the alkyl group includes, in addition to the specific examples of the alkyl groups referring to above-mentioned $R^1$, $R^3$, $R^4$ and $R^5$, 2-heptyl, 2-methylhexyl, 2-propylhexyl, n-nonyl, isononyl, n-decyl, isodecyl, n-undecyl, isoundecyl, n-dodecyl, isododecyl, n-tridecyl, isotridecyl,-tetradecyl, isotetradecyl, n-pentadecyl, isopentadecyl, n-hexadecyl, isohexadecyl, n-heptadecyl, isoheptadecyl, n-octadecyl, isooctadecyl, n-nonadecyl, isononadecyl, n-icosyl, isoicosyl and the like groups. Among these, an alkyl group having a long chain of not less than 5 carbon atoms, and an alkyl group which is branched at the second or further carbon atom from the amino nitrogen atom are preferred, and more preferably, 1,2-dimethylpropyl, cyclohexyl, 2-heptyl, n-hexyl, 2-ethylhexyl, n-octyl, 2-methylhexyl, n-octadecyl, 2-propylhexyl and the like groups.

The substituent for the alkyl group of $R^5$ of above-mentioned $NHR^5$ includes alkoxyl groups having 1 to 20 carbon atoms and nitrogen-containing groups having 1 to 20 carbon atoms. As the alkoxyl groups, there may be mentioned, in addition to the specific examples of the alkoxyl group to be contained as the substituent of the phenyl group of above-mentioned $R^2$, 1,2-dimethylbutoxy, n-heptyloxy, 1,4-dimethylpentyloxy, 2-methyl-1-isopropylpropoxy, 1-ethyl-3-methylbutoxy, n-octyloxy, 2-ethylhexyloxy and the like groups. Among these, ethoxy, isopropoxy, n-butoxy and 2-ethylhexyloxy groups are preferred, and as the alkyl group containing such alkoxyl group having 1 to 20 carbon atoms, 3-ethoxypropyl, 3-isopropoxypropyl, 3-butoxypropyl and 3-(2-ethylhexyloxy)propyl groups are preferred.

The nitrogen-containing group preferably includes a univalent group obtained by subtracting one hydrogen atom from a primary monoamine represented by the following general formula (3):

$$RNH_2 \quad (3)$$

or from a secondary amino represented by the following general formula (4):

$$R_2NH \quad (4)$$

(in the above formulae (3) and (4), R represents an alkyl group having 1 to 20 carbon atoms, and in the formula (4), two Rs may be the same or different.), and a univalent group derived from a heterocyclic compound having a nitrogen atom as a hetero atom, the nitrogen atom having a free valency. As the alkyl group includes the same alkyl groups to be the substituent of the above-mentioned phenyl and aralkyl groups. Such nitrogen-containing group may preferably be a univalent group obtained by subtracting one hydrogen atom from the secondary amine.

The above-mentioned nitrogen-containing group preferably includes N,N-diethylamino, N,N-diisopropylamino, N,N-di-n-butylamino, N,N-diethylaminoethyl, N,N-diisopropylaminoethyl, N,N-di-n-butylaminoethyl, piperazino, piperidine, morphorino, 2-piperazinoethyl, 2-piperidinoethyl, 2-morphorinoethyl and the like groups. By having the substituent represented by $NHR^5$ having the substituent as mentioned above at $\alpha$-position of the phthalocyanine core, the selective absorbing capacity of the near-infrared ray having the wavelength of exceeding 920 nm and not more than 1050 nm can be more enhanced.

Among the phthalocyanine compounds represented by the above-mentioned general formula (2), the specific examples of ones in which M is a non-metal include the following. Regarding the following compounds, each of 3- and 6-positions is α-position ($Z_1$, $Z_4$, $Z_5$, $Z_8$, $Z_9$, $Z_{12}$, $Z_{13}$ and $Z_{16}$) of the phthalocyanine core and each of 4- and 5-positions is β-position ($Z_2$, $Z_3$, $Z_6$, $Z_7$, $Z_{10}$, $Z_{11}$, $Z_{14}$ and $Z_{15}$) of the phthalocyanine core. Regarding the abbreviations of the following compounds, Pc represents a phthalocyanine core, and eight substituents at β-position are represented immediately after Pc, and eight substituents at α-position follow substituents at β-position.

- 4,5-octakisphenylthio-3,6-tetrakis(2,6-dimethylphenoxy)-tetrakis(N,N-diethylethylenediamino) phthalocyanine compound
  Abbreviation; Pc (PhS) $_8${2,6-$(CH_3)_2$PhO}$_4$ {$(C_2H_5)_2NCH_2CH_2NH$}$_4$
- 4,5-octakis(2-methoxyphenylthio)-3,6-tetrakis(2,6-dimethylphenoxy)-tetrakis(N,N-diethylethylenediamino) phthalocyanine compound
  Abbreviation; Pc{2-($CH_3O$)PhS}$_8${2,6-$(CH_3)$ $_2$PhO} $_4$ { $(C_2H_5)$ $_2NCH_2CH_2NH$ }$_4$
- 4,5-octakisphenylthio-3,6-tetrakis(2,6-dimethylphenoxy)-tetrakis(N,N-diisopropylethylenediamino) phthalocyanine compound
  Abbreviation; Pc(PhS)$_8${2,6-$(CH_3)_2$PhO}$_4$ [{$(CH_3)$ $_2CH$}$_2NCH_2CH_2NH$]$_4$
- 4,5-octakisphenylthio-3,6-tetrakis (2,6-dimethylphenoxy)-tetrakis(N,N-di-n-butylethylenediamino) phthalocyanine compound
  Abbreviation; Pc(PhS)$_8${2,6-$(CH_3)_2$PhO}$_4$ [{$CH_3$ $(CH_2)$ $_2CH$}$_2NCH_2CH_2NH$]$_4$
- 4,5-octakisphenylthio-3,6-tetrakis(2,6-dimethylphenoxy)-tetrakis(2-piperazinoethylamino) phthalocyanine compound
  Abbreviation;

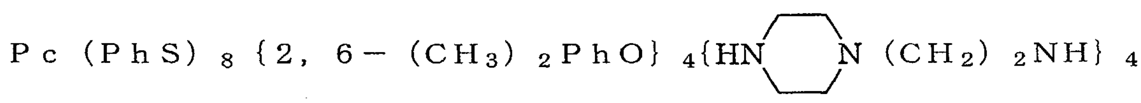

- 4,5-octakisphenylthio-3,6-tetrakis(2,6-dimethylphenoxy)-tetrakis(2-piperidinoethylamino) phthalocyanine compound
  Abbreviation;

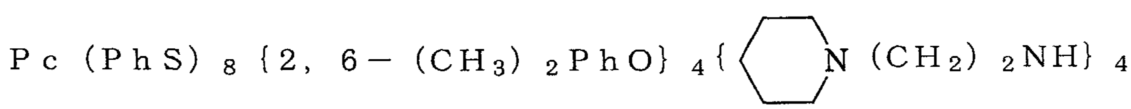

- 4,5-octakisphenylthio-3,6-tetrakis(2,6-dimethylphenoxy)-tetrakis(2-morphorinoethylamino) phthalocyanine compound
  Abbreviation;

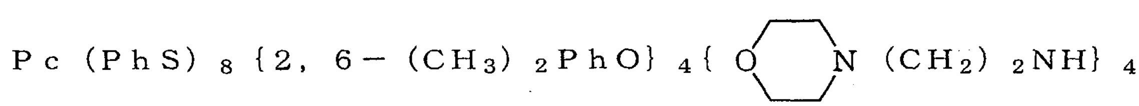

- 4,5-octakisphenylthio-3,6-tetrakis(2,6-dimethylphenoxy)-tetrakis(3-ethoxypropylamino) phthalocyanine compound
  Abbreviation; Pc (PhS)$_8${2,6-$(CH_3)_2$PhO}$_4${$CH_3CH_2O(CH_2)_3NH$}$_4$
- 4,5-octakisphenylthio-3,6-tetrakis(2,6-dimethylphenoxy)-tetrakis(3-isopropoxypropylamino) phthalocyanine compound
  Abbreviation; Pc(PhS)$_8${2,6-$(CH_3)_2$PhO}$_4$ {$(CH_3)_2CHO(CH_2)_3NH$}$_4$
- 4,5-octakisphenylthio-3,6-tetrakis(2,6-dimethylphenoxy)-tetrakis(3-butoxypropylamino) phthalocyanine compound
  Abbreviation; Pc(PhS)$_8${2,6-$(CH_3)_2$PhO}$_4${$CH_3(CH_2)_3O(CH_2)_3NH$}$_4$
- 4,5-octakisphenylthio-3,6-tetrakis(2,6-dimethylphenoxy)-tetrakis{3-(2-ethylhexyloxy)propylamino} phthalocyanine compound
  Abbreviation; Pc(PhS)$_8${2,6-$(CH_3)_2$PhO}$_4${$CH_3(CH_2)_3CH(C_2H_5)CH_2O(CH_2)_3NH$}$_4$

- 4,5-octakisphenylthio-3,6-tetrakis(2,6-dimethylphenoxy)-tetrakis(1,2-dimethylpropylamino) phthalocyanine compound
  Abbreviation; Pc (PhS) $_s${2, 6- (CH$_3$) $_2$PhO}$_4${CH$_3$CH$_2$C (CN$_3$) $_2$NH}$_4$
- 4,5-octakisphenylthio-3,6-tetrakis(2,6-dimethylphenoxy)-tetrakis(cyclohexylamino) phthalocyanine compound
  Abbreviation;

Pc (PhS) $_8$ {2, 6− (CH$_3$) $_2$PhO} $_4$( 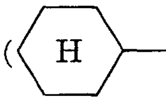 NH) $_4$

- 4,5-octakisphenylthio-3,6-tetrakis(2,6-dimethylphenoxy)-tetrakis(2-heptylamino) phthalocyanine compound
  Abbreviation; Pc(PhS)$_8${2,6-(CH$_3$)$_2$PhO}$_4${CH$_3$(CH$_2$)$_4$CH(CH$_3$)NH}$_4$
- 4,5-octakisphenylthio-3,6-tetrakis(2,6-dimethylphenoxy)-tetrakis(n-hexylamino) phthalocyanine compound
  Abbreviation; Pc(PhS)$_8${2,6-(CH$_3$)$_2$PhO}$_4${CH$_3$(CH$_2$)$_5$NH}$_4$
- 4,5-octakisphenylthio-3,6-tetrakis(2,6-dimethylphenoxy)-tetrakis(2-ethylhexylamino) phthalocyanine compound
  Abbreviation; Pc(PhS) $_8${2,6-(CH$_3$) $_2$PhO }$_4$ {CH$_3$ (CH$_2$) $_3$CH (C$_2$H$_5$) CH$_2$NH }$_4$
- 4,5-octakis(4-methoxyphenylthio)-3,6-tetrakis(2,6-dimethylphenoxy)-tetrakis(2-ethylhexylamino) phthalocyanine compound
  Abbreviation; Pc{4-(CH$_3$O)PhS}$_8${2,6-(CH$_3$) $_2$PhO }$_4$ {CH$_3$ (CH$_2$) $_3$CH (C$_2$H$_5$) CH$_2$NH}$_4$
- 4,5-octakisphenylthio-3,6-tetrakis(2,6-dimethylphenoxy)-tetrakis(n-octylamino) phthalocyanine compound
  Abbreviation; Pc (PhS)$_8$ {2, 6-(CH$_3$)$_2$PhO} {CH$_3$ (CH$_2$) $_7$NH}$_4$
- 4,5-octakisphenylthio-3,6-tetrakis(2,6-dimethylphenoxy)-tetrakis(n-octadecylamino) phthalocyanine compound
  Abbreviation; Pc(PhS)$_8$ {2,6-(CH$_3$)$_2$PhO}$_4${CH$_3$(CH$_2$)$_{17}$NH}$_4$

As phthalocyanine compounds in which M is a metal, metal oxide or metal halide among the above-mentioned compounds, one having vanadyl as a central metal is the most preferred and specific examples include one obtained by changing the phthalocyanine core (Pc) moiety of the above-mentioned specific examples in which M is a non-metal except four compounds as

Pc (PhS) $_8$ {2, 6− (CH$_3$) $_2$PhO} $_4${ 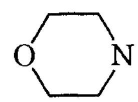 (CH$_2$) $_2$NH} $_4$,

Pc(PhS)$_8${2,6-(CH$_3$)$_2$PhO}$_4${CH$_3$CH$_2$C(CH$_3$)$_2$NH}$_4$,

Pc (PhS) $_8$ {2, 6− (CH$_3$) $_2$PhO} $_4$( 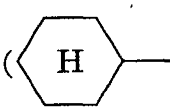 NH) $_4$

and Pc(PhS)$_8${2,6-(CH$_3$)$_2$PhO}$_4${CH$_3$(CH$_2$)$_4$CH(CH$_3$)NH}$_4$ to VOPc. By using one having vanadyl as a central metal as the phthalocyanine compound, selective absorbing capacity of the near-infrared ray of exceeding 920 nm and not more than 1050 nm and the light-proof property become excellent. The above-mentioned phthalocyanine compound may be used in one species or two or more species. It may be used combinedly with the phthalocyanine compound represented by the above-mentioned general formula (1). In case that two or more species different in the wavelength are used, the heat ray-absorbing property can be improved.

The near-infrared absorbing dye (B) is used preferably in an amount of not less than 0.005 part by weight per 100 parts by weight of the pressure-sensitive adhesive polymer (A). When the amount is less than 0.0005 part by weight, the coat films or adhesive layers formed by the pressure-sensitive adhesive composition may fail to exhibit its near-infrared absorbing capacity to a satisfactory extent. The amount is more preferably not less than 0.025 part by weight, still more preferably not less than 0.05 part by weight. On the other hand, the amount is preferably not more than 20 parts by weight. When it exceeds 20 parts by weight, the physical properties of the near-infrared absorbing coat film may decrease. More preferably, it is not more than 10 parts by weight, still more preferably not more than 5 parts by weight. Preferably, it is selected according to the coat film thickness. When the thickness is 10 μm, for example, the amount is preferably not less than 0.5 part by weight but not more than 20 parts by weight, more preferably not

less than 1.0 part by weight but not more than 10 parts by weight. In forming coat films having a thickness of 3 mm, the amount is preferably not less than 0.002 part by weight but not more than 0.06 part by weight, more preferably not less than 0.005 part by weight but not more than 0.03 part by weight. When the thickness is 10 mm, the amount is preferably not less than 0.0005 part by weight but not more than 0.02 part by weight, more preferably not less than 0.0010 part by weight but not more than 0.01 part by weight. Furthermore, the weight of the dye contained per unit area of the coat film is preferably not less than 0.01 g/cm$^2$, for instance. When it is less than 0.01 g/m$^2$, the effects of the near-infrared absorbing dye may not be produced to a satisfactory extent. The weight is preferably not less than 0.05 g/m$^2$, more preferably not less than 0.1 g/m$^2$. On the other hand, it is preferably not more than 2.5 g/m$^2$. At levels exceeding 2.5 g/m$^2$, the cost of coat film production may increase. More preferably, it is not more than 1.0 g/m$^2$, still more preferably not more than 0.5 g/m$^2$.

In the practice of the present invention, additive type and/or reactive type ultraviolet absorbers can be used as the ultraviolet absorber (C), as described hereinabove, and salicylate type ultraviolet absorbers, benzophenone type ultraviolet absorbers, benzotriazole type ultraviolet absorbers, cyanoacrylate type ultraviolet absorbers, and benzoate type ultraviolet absorbers are suited for use. Among them, the above-mentioned ultraviolet-absorbing monomers are suited for use as the reactive ultraviolet absorbers.

Suited for use as the above-mentioned salicylate ultraviolet absorbers are phenyl salicylate, p-tert-butylphenyl salicylate and p-octylphenyl salicylate. As commercial grades of phenyl salicylate, there may be mentioned SAP (trademark, product of Iwaki Seiyaku Co., Ltd.), Salol (trademark, product of Dow Chem. Co.), and Salol P (trademark, product of Hatsudai Pharmaceutical Co.). As commercial grades of p-tert-butylphenyl salicylate, there may be mentioned TBS (trademark, product of Dow Chem. Co.), TBS (trademark, product of Hatsudai Pharmaceutical Co.), Biosorb 90 (trademark, product of Kyodo Chemical Co.), and Butylsalol (trademark, product of Iwaki Seiyaku Co., Ltd.) As commercial grades of p-octylphenyl salicylate, there may be mentioned OPS (trademark, product of Eastman Chemical Co.) and OPS (trademark, product of Hatsudai Pharmaceutical Co.).

Suited for use as the above-mentioned benzophenone ultraviolet absorbers are 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone and bis(2-methoxy-4-hydroxy-5-benzoylphneyl)methane. As commercial grades of 2,4-dihydroxybenzophenone, there may be mentioned ASL-23 (trademark, product of Shonan Kagaku), Seesorb 100 (trademark, product of Shiraishi Calcium Kaisha, Ltd.), Zislizer O (trademark, product of Sankyo Chemical Co., Ltd.), Sumisorb 100 (trademark, product of Sumitomo Chemical Co., Ltd.), DHBP (trademark, product of Eastman Chemical Co.), Biosorb 100 (trademark, product of Kyodo Chemical), and Uvinul 400 (trademark, product of BASF Corp.). As commercial grades of 2-hydroxy-4-methoxybenzophenone, there may be mentioned ASL-23 (trademark, product of Shonan Kagaku), Cyasorb UV-9 (trademark, product of Cytec Industries Inc.), Zislizer M (trademark, product of Sankyo Chemical Co., Ltd.), Sumisorb 100 (trademark, product of Sumitomo Chemical Co., Ltd.), Seesorb 101 (trademark, product of Shiraishi Calcium Kaisha Ltd.), Biosorb 110 (trademark, product of Kyodo Chemical), Uvinul M-40 (trademark, product of BASF Corp.), and Eusorex 4360 (trademark, product of Merck Ltd., Japan). As commercial grades of 2-hydroxy-4-octoxybenzophenone, there may be mentioned Cyasorb UV-531 (trademark, product of Cytec Industries Lnc.), Seesorb 102 (trademark, product of Shiraishi Calcium Kaisha, Ltd.), Zislizer E (trademark, product of Sankyo Chemical Co., Ltd.), Sumisorb 130 (trademark, product of Sumitomo Chemical Co., Ltd.), Seesorb 130 (trademark, product of Shiraishi Calcium Kaisha, Ltd.), Biosorb 130 (trademark, product of Kyodo Chemical), Advastab 46, and Adekastab 1413 (trademark, product of Asahi Denka Kogyo). As commercial grades of 2-hydroxy-4-dodecyloxybenzophenone, there may be mentioned DOPB (trademark, product of Eastman Chemical Co.) and AM-320 (trademark) and, as a commercial product of 2,2'-dihydroxy-4-methoxybenzophenone, there may be mentioned Cyasorb UV-24 (trademark, product of Cytec Industries Inc.). As commercial grades of 2,2'-dihydroxy-4,4'-dimethoxybenzophenone, there may be mentioned ASL-40 (trademark, product of Shonan Kagaku) and Uvinul D-49 (trademark, product of BASF Corp.) and, as a commercial grade of 2-hydroxy-4-methoxy-5-sulfobenzophenone, there may be mentioned Uvinul MS-40 (trademark, product of BASF Corp.). As a commercial grade of bis(2-methoxy-4-hydroxy-5-benzoylphenyl)methane, there may be mentioned Adekastab LA-51 (trademark, product of Asahi Denka Kogyo).

Suited for use as the above-mentioned benzotriazole ultraviolet absorbers are 2-(2'-hydroxy-5'-methylphenyl) benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-(2'-hydroxy-3'-(3", 4", 5", 6"-tetrahydrophthalimidomethyl)-5'-methylphenyl)benzotriazole, 2,2'-methylenebis [4-(1,1,3,3-tetramethylbutyl)-6-(2H-benzotriazol-2-yl)phenol], 2- (2' -hydroxy-5'-methacryloxyphenyl)-2H-benzotriazole, 2,2'-methylenebis[4-(1,1,3,3-tetramethylbutyl)-6-[(2H-benzotriazol-2-yl)phenol]], and 2-(2'-hydroxy-3',5'-di-t-amylphenyl)benzotriazole. As commercial grades of 2-(2'-hydroxy-5'-methylphenyl)benzotriazole, there may be mentioned JF-77 (trademark, product of Johoku Chemical), Tinuvin P (trademark, product of Ciba Specialty Chemicals K.

K.), Seesorb 701 (trademark, product of Shiraishi Calcium), Sumisorb 200 (trademark, product of Sumitomo Chemical Co., Ltd.), Biosorb 520 (trademark, product of Kyodo Chemical), and Adekastab LA-32 (trademark, product of Asahi Denka Kogyo). As a commercial grade of 2-(2'-hydroxy-5'-tert-butylphenyl)benzotriazole, there may be mentioned Tinuvin PS (trademark, product of Ciba Specialty Chemicals K.K.) and, as commercial grades of 2-(2'-hydroxy-3',5'-di-tert-butylphenyl)benzotriazole, there may be mentioned Tinuvin 320 (trademark, product of Ciba Specialty Chemicals), Biosorb 582 (trademark, product of Kyodo Chemical), and JF-86 (trademark, product of Johoku Chemical). As commercial grades of 2-(2'-hydroxy-3'-tert-butyl-5'-methylphenyl)-5-chlorobenzotriazole, there may be mentioned Tinuvin 326 (trademark, product of Ciba Specialty Chemicals K.K.), Seesorb 703 (trademark, product of Shiraishi Calcium Kaisha, Ltd.), Biosorb 550 (trademark, product of Kyodo Chemical), Sumisorb 300 (trademark, product of Sumitomo Chemical Co., Ltd.), JF-79 (trademark, product of Johoku Chemical), and Adekastab LA-36 (trademark, product of Asahi Denka Kogyo) and, as commercial grades of 2-(2'-hydroxy-3',5'-di-tert-butylphenyl)-5-chlorobenzotriazole, there may be mentioned Tinuvin 327 (trademark, product of Ciba Specialty Chemicals K.K.), Seesorb 702 (trademark, product of Shiraishi Calcium Kaisha, Ltd.), Biosorb 580 (trademark, product of Kyodo Chemical), JF-78 (trademark, product of Johoku Chemical), and Adekastab LA-34 (trademark, product of Asahi Denka Kogyo). As commercial grades of 2-(2'-hydroxy-3',5'-di-tert-amylphenyl)benzotriazole, there may be mentioned Tinuvin 328 (trademark, product of Ciba Specialty Chemicals), Biosorb 591 (trademark, product of Kyodo Chemical), Sumisorb 350 (trademark, product of Sumitomo Chemical Co., Ltd.), and JF-80 (trademark, product of Johoku Chemical). As commercial grades of 2-(2'-hydroxy-3'-(3",4",5",6"-tetrahydrophthalimidomethyl)-5'-methylphenyl)benzotriazole, there may be mentioned Biosorb 590 (trademark, product of Kyodo Chemical), Sumisorb 250 (trademark, product of Sumitomo Chemical Co., Ltd.), and Seesorb 706 (trademark, product of Shiraishi Calcium Kaisha, Ltd.). As a commercial grade of 2,2'-methylenebis [4-(1,1,3,3-tetramethylbutyl)-6-[(2H-benzotriazol-2-yl)phenol]], there may be mentioned Adekastab LA-31 (trademark, product of Asahi Denka Kogyo) and, as a commercial grade of 2-(2'-hydroxy-5'-methacryloxyphenyl)-2H-benzotriazole, there may be mentioned RUVA-93 (trademark, product of Otsuka Chemical Co., Ltd.).

Suited for use as the above-mentioned cyanoacrylate ultraviolet absorbers are 2-ethylhexyl-2-cyano-3,3'-diphenylacrylate and ethyl-2-cyano-3,3'-diphenylacrylate. As commercial grades of 2-ethylhexyl-2-cyano-3,3'-diphenylacrylate, there may be mentioned Uninol 3039, N539T (trademark, product of BASF Corp.) and Biosorb 930 (trademark, product of Kyodo Chemical) and, as commercial grades of ethyl 2-cyano-3,3'-diphenylacrylate, there may be mentioned Uninol 3035 (trademark, product of BASF Corp.) and Biosorb 910 (trademark, product of Kyodo Chemical).

Suited for use as the benzoate ultraviolet absorbers are Tinuvin 120 (trademark, product of Ciba Specialty Chemicals K.K.) and Sumisorb 400 (trademark, product of Sumitomo Chemical Co., Ltd.).

As for the amount of addition of the ultraviolet absorber (C), the additive type ultraviolet absorber and reactive type ultraviolet absorber are preferably used in a total amount of not less than 0.1 part by weight and not more than 100 parts by weight per 100 parts by weight of the pressure-sensitive adhesive polymer (A). When the amount is less than 0.1 part by weight, the near-infrared absorbing dye may undergo remarkable deterioration. When it exceeds 100 parts by weight, poor stickiness may result. More preferably, the amount of addition is not less than 1 part by weight, still more preferably not less than 3 parts by weight. More preferably, it is not more than 50 parts by weight, still more preferably not more than 20 parts by weight. The above-mentioned amount of addition of the ultraviolet absorber (C) refers to the amount including both the additive type and reactive type ones.

Usable as the hindered amine light stabilizer (D) are additive type and/or reactive type ones, as mentioned hereinabove. As such light stabilizers, there may be mentioned two kinds of light stabilizers, namely hindered phenol skeleton-free hindered amine light stabilizers (d-1) and hindered phenol skeleton-containing hindered amine light stabilizers (d-2). These produce different effects. In the practice of the present invention, these may be used in combination. The hindered phenol skeleton-containing hindered amine light stabilizers (d-2) constitute a kind of typical antioxidants. They entrap radical species generated by ultraviolet rays and thus produce a deterioration-preventing effect. Therefore, the combined use of a hindered phenol skeleton-containing hindered amine light stabilizer (d-2) is preferred since this is effective in inhibiting ultraviolet-due deterioration. Thus, in a preferred embodiment of the invention, the ultraviolet absorber (C) is used in combination with a hindered amine light stabilizer (D) comprising a hindered phenol skeleton-containing hindered amine light stabilizer (d-2) as an essential constituent thereof.

As the hindered phenol skeleton-free hindered amine light stabilizer (d-1), there may be mentioned Sanol LS-770 (trademark, product of Sankyo Co., Ltd.), Adekastab LA-77 (trademark, product of Asahi Denka Kogyo), Sumisorb 577 (trademark, product of Sumitomo Chemical Co., Ltd.), Biosorb 04 (trademark, product of Kyodo Chemical), Chimassorb 944LD (trademark, product of Ciba Specialty Chemicals K.K.), Tinuvin 622LD (trademark, product of Ciba Specialty Chemicals K.K.), Biosorb 03 (trademark, product of Kyodo Chemical), Adekastab LA-57, Adekastab LA-62, Adekastab LA-67, Adekastab LA-63, Adekastab LA-68, Adekastab LA-82, Adekastab LA-87, Adekastab LA-52 (the above eight being trademarks, products of Asahi Denka Kogyo), and Goodrite UV 3034 (trademark, product of Goodrich Co.).

Suited for use as the hindered phenol skeleton-containing hindered amine light stabilizer (d-2) is TINUVIN 144 (trademark, product of Ciba Specialty Chemicals).

As regards the amount of addition of the hindered amine light stabilizer (D), when it is a hindered phenol skeleton-free hindered amine light stabilizer (d-1), this is preferably used in an amount of not less than 0.1 part by weight and not more than 10 parts by weight per 100 parts by weight of the pressure-sensitive adhesive polymer (A). When it is less than 0.1 part by weight, the near-infrared absorbing dye may undergo marked deterioration while, it exceeds 10 parts by weight, poor stickiness may result. More preferably, the amount of addition is not less than 0.3 part by weight, still more preferably not less than 0.5 part by weight. More preferably, it is not more than 5 parts by weight, still more preferably not more than 2 parts by weight. In the case of a hindered phenol skeleton-containing hindered amine light stabilizer (d-2), it is used preferably in an amount of not less than 0.1 part by weight and not more than 50 parts by weight per 100 parts by weight of the pressure-sensitive adhesive polymer (A). At amounts below or above this range, it may become difficult to sufficiently prevent the near-infrared absorbing colorant from deterioration. More preferably, it is not less than 0.3 part by weight, still more preferably not less than 0.5 part by weight. More preferably, it is not more than 20 parts by weight, still more preferably not more than 10 parts by weight.

Usable as the antioxidant (E) are radical chain inhibitors (primary antioxidants) and peroxide decomposers (secondary antioxidants).

As the radical chain inhibitors (primary antioxidants), there may be mentioned phenolic antioxidants and amine antioxidants. Suited for use as the phenolic antioxidants are monophenol type antioxidants such as 2,6-di-t-butyl-p-cresol, butylated hydroxyanisole (BHA), 2,6-di-t-butyl-4-ethylphenol and stearyl β-(3,5-di-t-butyl-4-hydroxyphenyl)propionate; bisphenol antioxidants such as 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol) and 3,9-bis[1,1-dimethyl-2-[β-(3-t-butyl-4-hydroxy-5-methylphenyl)propionyloxy]ethyl]-2,4,8,10-tetraoxaspiro[5.5]undecane; and high-molecular-weight phenolic antioxidants such as 1,1,3-tris(2-methyl-4-hydroxy-5-t-butylphenyl)butane, tetrakis[methylene-3-(3',5'-di-t-butyl-4'-hydroxyphenyl)propionate]methane, bis[3,3'-bis(4'-hydroxy-3'-t-butylphenyl)butyric acid] glycol ester, 1,3,5-tris(3',5'-di-t-butyl-4'-hydroxybenzyl)-sym-triazine-2,4,6-(1H,3H,5H)-trione and tocopherol (s) .

As the peroxide decomposers, there may be mentioned sulfur-containing antioxidants and phosphorus-containing antioxidants. Suited for use as the sulfur-containing antioxidants are dilauryl 3,3'-thiodipropionate, dimyristyl 3,3'-thiodipropionate, and distearyl 3,3'-thiodipropionate. Suited for use as the phosphorus-containing antioxidants are triphenyl phosphite, diphenyl isodecyl phosphite, phenyl diisodecyl phosphite, 4,4'-butylidenebis(3-methyl-6-t-butylphenyl ditridecyl) phosphite, cyclic neopentanetetrayl bis(octadecyl phosphite), tris(nonylphenyl) phosphite, tris(mono-and/or dinonylphenyl) phosphite, diisodecyl pentaerythritol diphosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-t-butylphenyl) phosphite, cyclic neopentanetetrayl bis (2,4-di-t-butylphenyl) phosphite, cyclic neopentanetetrayl bis(2,6-di-t-butyl-4-methylphenyl) phosphite, and 2,2'-methylenebis(4,6-di-t-butylphenyl) octyl phosphite.

Among these, hindered phenol type ones are preferred in view of their good compatibility with the pressure-sensitive adhesive polymer (A) and the lesser tendency toward coloration and so forth.

The antioxidant (E) is used preferably at an amount of addition of not less than 0.1 part by weight, more preferably not less than 1 part by weight, still more preferably not less than 3 parts by weight, per 100 parts by weight of the pressure-sensitive adhesive polymer (A). Further, the amount is preferably not more than 100 parts by weight, more preferably not more than 50 parts by weight, still more preferably not more than 20 parts by weight. When the amount of addition of the antioxidant (E) is excessively low, the near-infrared absorbing dye may be easy to undergo deterioration while, at excessively high amounts, poor stickiness may result, or precipitation may occur, leading to loss of coat film transparency.

When, in the practice of the invention, the ultraviolet absorber (C) and hindered amine light stabilizer (D) are used in combination and a hindered phenol skeleton-free hindered amine light stabilizer (d-1) is used as the latter, the proportion between them is preferably such that the latter amounts to not less than 0.1 part by weight, more preferably not less than 1 part by weight, still more preferably not less than 5 parts by weight, per 100 parts by weight of the ultraviolet absorber (C). On the other hand, the amount of (d-1) is preferably not more than 100 parts by weight, more preferably not more than 50 parts by weight, still more preferably not more than 30 parts by weight. When a hindered phenol skeleton-containing hindered amine light stabilizer (d-2) is used, this is used preferably in an amount of not less than 0.1 part by weight, more preferably not less than 1 part by weight, still more preferably not less than 5 parts by weight, per 100 parts by weight of the ultraviolet absorber (C). That amount is preferably not more than 100 parts by weight, more preferably not more than 50 parts by weight, still more preferably not more than 30 parts by weight.

Preferably, the pressure-sensitive adhesive composition of the invention further contains a color tone adjusting agent. In plasma displays, a neon-due orange color is produced in the wavelength range of 580 to 600 nm. For obtaining a vivid red color, it is demanded that this orange coloration should be cut off and, at the same time, the color tone of the optical filter should be adjusted to gray, which is a natural color. When a color tone adjusting agent is added to the pressure-sensitive adhesive composition and the resulting composition is used in sticking plasma display optical filter-forming materials together, it is possible to cut off the neon-due orange coloration and adjust the color tone of the

optical filter to gray, which is a natural color.

The color tone adjusting agent may be a dye or a pigment. Preferred as the dye are such dyes as squarylium dyes, azomethine dyes, cyanine dyes, merocyanine dyes, phthalocyanine dyes, oxonol dyes, anthraquinone dyes, benzylidene dyes, azo dyes, and triarylmethane dyes as well as metal chelate compounds derived therefrom. Preferred as the pigment are organic pigments of the azo, phthalocyanine, anthraquinone, quinacridone or the like.

The amount of addition of the color tone adjusting agent is preferably 0.1 to 10 times, more preferably 0.5 to 5 times, the near-infrared absorbing dye on the mass basis.

The coat film or film formed of the pressure-sensitive adhesive composition of the invention may be used either in a crosslinked or uncrosslinked state.

The pressure-sensitive adhesive composition of the invention can be cured under various curing conditions according to the intended use thereof and to the crosslinking agent species and thus can be used in the form of a cold-curable, hot-curable, ultraviolet-curable or electron beam-curable form, for instance. The amount of addition and the method of addition and dispersion of the curing agent are not particularly restricted but, when the pressure-sensitive adhesive polymer (A) occurs as a polyol having a plurality of hydroxyl groups in each molecule, for instance, the addition amount and the method of adding and dispersing which are generally used in curing polyols may be employed.

In cases where the pressure-sensitive adhesive polymer (A) is constituted of a polyol, a (blocked) polyisocyanate compound and an aminoplast resin are suited for use as the crosslinking agent. These may be used singly or two or more species thereof may be used in combination.

The term "(blocked) polyisocyanate compound" as used herein means a polyisocyanate compound and/or a blocked polyisocyanate compound.

The polyisocyanate compound may be any of those compounds which have at least two isocyanato groups within the molecule. It thus includes tolylene diisocyanate, xylylene diisocyanate, diphenylmethanediisocyanate, 1,6-hexamethylene diisocyanate, isophoronediisocyanate, 4,4'-methylenebis(cyclohexyl isocyanate), lysinediisocyanate, trimethylhexamethylene diisocyanate, 1,3-bis(isocyanatomethyl)cyclohexane, 1,5-naphthalenediisocyanate, triphenylmethanetriisocyanate, and other polyisocyanates; adducts, biuret forms, and isocyanurate forms of these polyisocyanates, and other polyisocyanate derivatives (modifications).

The above-mentioned blocked polyisocyanate compound is generally the product of blocking of the isocyanato groups of a polyisocyanate compound with a blocking agent so that the pressure-sensitive adhesive composition may be crosslinked in the step of drying by heating and the storage stability thereof at ordinary temperature may be improved.

The blocking agent includes such compounds as ε-caprolactam, phenol, cresol, oximes, and alcohols.

As commercial grades of the (blocked) polyisocyanate compound, there may be mentioned, for example, Sumidur N 3200, Sumidur N 3300, Sumidur BL 3175, Desmodur N 3400, Desmodur N 3600, Desmodur VPLS 2102 (trademarks, products of Sumitomo Bayer Urethane), and Duranate E-402-90T (trademark, product of Asahi Kasei Corp.). For preventing the coat films formed of the pressure-sensitive adhesive composition from yellowing, the use of a non-yellowing polyisocyanate compound having no isocyanato group directly bonding to an aromatic ring is preferred.

The (blocked) polyisocyanate compound is used preferably in an amount such that the isocyanato groups in the (blocked) polyisocyanate compound amount to not less than 0.01 mole and not more than 5 moles per mole of the hydroxyl groups in the pressure-sensitive adhesive composition. When it is less than 0.01 mole, the unreacted hydroxyl groups remain in large amounts in the pressure-sensitive adhesive composition, so that the weathering resistance of the coat films formed using the resulting pressure-sensitive adhesive composition may decrease. When it exceeds 5 moles, the unreacted isocyanato groups remain in large amounts in the coat films and, in the step of coat film curing, they react with the moisture in the air, causing foaming in or whitening of the coat films. More preferably, the amount is not less than 0.1 mole, still more preferably not less than 0.5 mole. More preferably, it is not more than 2 moles, still more preferably not more than 1.2 moles.

The aminoplast resin mentioned above is an addition condensation product derived from an amino group-containing compound, such as melamine or guanamine, and formaldehyde, and is also called "amino resin".

As the aminoplast resin, there may be mentioned dimethylolmelamine, trimethylolmelamine, tetramethylolmelamine, pentamethylolmelamine, hexamethylolmelamine, complete alkyl type methylated melamine, complete alkyl type butylated melamine, complete alkyl type isobutylated melamine, complete alkyl type mixed etherified melamine, methylol type methylated melamine, imino type methylated melamine, methylol type mixed etherified melamine, imino type mixed etherified melamine, and like melamine resins; butylated benzoguanamine, methyl/ethyl mixed alkylated benzoguanamine, methyl/butyl mixed alkylated benzoguanamine, butylated glycoluril, and like guanamine resins, and the like.

As commercial grades of the above-mentioned aminoplast resin, there may be mentioned Cymel 1128, Cymel 303, Mycoat 506, Cymel 232, Cymel 235, Cymel 771, Cymel 325, Cymel 272, Cymel 254, and Cymel 1170 (all being trademarks, products of Mitsui Cytec), and the like.

As for the amount of addition of the aminoplast resin, it is preferably incorporated in an amount such that the

solid mass of the aminoplast resin may amount to not less than 0.1 part by weight, more preferably not less than 0.5 part by weight per 100 parts by weight of the pressure-sensitive adhesive polymer (A). It is preferably incorporated in not more than 10 parts by weight, more preferably not more than 5 parts by weight. The use of the aminoplast resin in excess may lead to loss of stickiness and, when the amount thereof is too small, crosslinking will not proceed, possibly resulting in a poor cohesive force.

Suitably used as the crosslinking system in the pressure-sensitive adhesive composition of the invention are not only the above-mentioned OH/isocyanate system but also the systems acid/epoxy, acid/metal chelate, acid/oxazoline, and acid/amine. Unless the effects of the invention are reduced, the pressure-sensitive adhesive composition of the invention may further contain a crosslinking agent other than the above-mentioned polyisocyanate compound, an epoxy compound, an aziridine compound, an oxazoline compound, a melamine compound, a metal chelate compound, a carbodiimide compound, a glycidylamine compound, an amine compound, or the like. These may be used singly or two or more of them may be used in combination.

The pressure-sensitive adhesive composition of the present invention may contain one or more species of the curing catalyst, as necessary, for promoting the crosslinking reaction between the pressure-sensitive adhesive polymer (A) and crosslinking agent. Such curing catalyst is not particularly restricted but, when the above-mentioned (blocked) polyisocyanate compound, for instance, is used, such a catalyst as dibutyltin dilaurate or a tertiary amine is preferably used. When the above-mentioned aminoplast resin is used, an acidic or basic curing catalyst is preferably used.

The pressure-sensitive adhesive composition of the invention may contain, as a further ingredient(s), one or more species of solvents and additives. As such solvents, there may be mentioned the same organic solvents as mentioned above and, as the additives, there may be mentioned those additives known in the art and generally used in resin compositions for forming films, coating films or the like, for example leveling agents; colloidal silica, alumina sol and like inorganic fine particles; antifoaming agents; antisagging agents; silane coupling agents; titanium white, composite oxide pigments, carbon black, organic pigments, pigment intermediates, and other pigments; pigment dispersants; viscosity modifiers; ultraviolet stabilizers; metal inactivators; peroxide decomposers; fillers; reinforcing agents; plasticizers; lubricants; anticorrosives; rust preventives; organic and inorganic ultraviolet absorbers; inorganic heat ray absorbers; organic and inorganic flame retardants; antistatic agents; tackifiers; nucleating agents, and so forth.

The above-mentioned tackifiers are stickiness improving agents and can adjust (improve) the stickiness. As the tackifiers, there may be mentioned, for example, (polymerized) rosin type, (polymerized) rosin ester type, terpene type, terpene phenol type, coumarone type, coumarone-indene type, styrenic resin type, xylene resin type, phenol resin type, and petroleum resin type ones. These may be used singly or two or more of them may be used in combination. On the occasion when such a tackifier is incorporated, the amount of addition is not particularly restricted but may be adequately selected so that the desired cohesive performance characteristics may be obtained. As the nucleating agents, there may be mentioned sodium 2,2'-methylenebis(4,6-di-t-butylphenyl)phosphate, sodium bis(4-t-butylphenyl)phosphate, bis(p-methylbenzylidene)sorbitol, alkyl-substituted dibenzylidenesorbitol, and bis(p-ethylbenzylidene) sorbitol. The amount of addition of the nucleating agents is preferably 0.01 to 5 parts by weight, more preferably 0.1 to 2 parts by weight, relative to 100 parts by weight of the pressure-sensitive adhesive polymer (A). At lower amounts, no satisfactory effect may be obtained.

The pressure-sensitive adhesive composition of the present invention may further contain a light stabilizer other than the hindered amine light stabilizer (D). As such light stabilizer, there may be mentioned nickel bis(octylphenyl) sulfide, [2,2'-thiobis(4-tert-octylphenolato)]-n-butylamine nickel, nickel complex-3,5-di-tert-butyl-4-hydroxybenzylphosphoric acid monoethylate, and nickel dibutyldithiocarbamate. Available as suitable commercial grades of nickel bis (octylphenyl) sulfide are AM-101 (trademark, product of Ferro Chemical Corp.) and AM-105 (trademark, product of Ferro Chemical Corp.). Available as a suitable commercial grade of [2,2'-thiobis(4-tert-octylphenolato)]-n-butylamine nickel is Cyasorb UV-1084 (trademark, product of Cytec Industries Inc.). Available as a suitable commercial grade of nickel complex-3,5-di-tert-butyl-4-hydroxybenzylphosphoric acid monoethylate is Irgasorb 2002 (trademark, product of Ciba Specialty Chemicals K.K.). A suitable commercial grade of nickel dibutyldithiocarbamate is NBC (trademark, product of ICI or of Ouchishinko Chemical Industrial Co., Ltd.).

As for the form of use of the coat films or films formed of the pressure-sensitive adhesive composition of the present invention, there may be mentioned, for example, a laminate comprising a coat film or film formed of the pressure-sensitive adhesive composition of the present invention, which serves as an adhesive layer, as disposed on a transparent substrate or sandwiched between two transparent substrates.

Suitably used as the transparent substrates mentioned above are organic substrates such as polycarbonate resins, acrylic resins, polyethylene resins, polyester resins, polypropylene resins, polystyrene resins, polyvinyl chloride resins, polyvinyl alcohol resins, polyethylene terephthalate resins, triacetylcellulose resins, among others; and inorganic substrates such as glass substrates.

The above-mentioned adhesive layer can be formed by applying the pressure-sensitive adhesive composition onto a transparent substrate. The method of applying the pressure-sensitive adhesive composition to the substrate is

not particularly restricted but those methods known in the prior art may be employed. Thus, for example, the composition may be applied directly to the substrate, or applied to a release liner (release paper, release film) in advance and then, after drying, transferred to the substrate. The pressure-sensitive adhesive composition may be applied to either one side or both sides of the substrate. Since the films or coat films formed of the pressure-sensitive adhesive composition of the present invention have stickiness, it is preferably, when the pressure-sensitive adhesive composition is applied to a substrate for the formation of an adhesive layer and then a laminate is further formed using another substrate or when the pressure-sensitive adhesive composition is used in the form of a film, to laminate the adhesive layer surface or film surface with a release paper and, on the occasion of use, peel off the release paper.

In forming the above-mentioned adhesive layer, the method of applying the pressure-sensitive adhesive composition to the transparent substrate may be adequately selected according to the form of the pressure-sensitive adhesive composition to be applied and other factors. As such method, there may be mentioned (1) a solvent type application method comprising dissolving the pressure-sensitive adhesive composition in an organic solvent and applying the resulting uniform solution to the surface of various films or sheets (substrates), (2) a emulsion type application method comprising dispersing the pressure-sensitive adhesive composition in water and applying the resulting emulsion to the surface of various substrates, (3) a hot melt type application method comprising melting and mixing the pressure-sensitive adhesive composition at elevated temperatures and applying the resulting melt to the substrate surface, and (4) a calendaring type application method which is a solvent-free application method. In the case of (1) the solvent type application method or (2) the emulsion type application method, an appropriate organic solvents mentioned above may be admixed with the pressure-sensitive adhesive composition for the application thereof and, as for the method for application, there may be mentioned the methods of application which use various coaters, and the dipping, spraying, brushing and electrostatic techniques, and the like. As the coaters, there may be mentioned gravure coaters such as arc gravure coaters, offset gravure coaters, pan feed gravure coaters and die feed gravure coaters; reverse coaters such as top feed reverse coaters and bottom feed reverse coaters; comma coaters such as comma direct coaters, comma reverse coaters and U comma coaters; air knife coaters, knife coaters, fountain die coaters, lip coaters, mayor bar coaters, curtain flow coaters, roll coaters, spin coaters, blade coaters, bar coaters, die coaters, spray coaters, and so forth. The method of curing the pressure-sensitive adhesive composition may be adequately selected according to the constituent species and other factors and, for example, there may be mentioned a method comprising heating and a method comprising irradiation with ultraviolet rays or electron beams.

The thickness of the above-mentioned adhesive layer is not particularly restricted but may be selected at an appropriate level according to the intended use. For example, the dry thickness is preferably not less than 5 μm and not more than 200 μm. It is more preferably not less than 15 μm and not more than 100 μm, still more preferably not more than 50 μm. When the adhesive layer is thinner, poor adhesiveness may result, unfavorably allowing partial lifting or flagging. When it is thicker, the adhesive may unfavorably poke out.

In the above-mentioned laminate, an ultraviolet absorbing layer is preferably disposed on the incident light side of the near-infrared absorbing layer. By this, the near-infrared absorbing dye can be more effectively prevented from deterioration. The lamination structure of such laminate is not particularly restricted but includes, for example, (1) a laminate form comprising an ultraviolet absorbing layer, the adhesive layer, and the substrate in that order from the incident light side, and (2) a laminate form comprising an ultraviolet absorbing layer, the substrate, and the adhesive layer in that order from the incident light side. For improving the antiabrasion and stain resistance, the laminate surface may be further provided with a surface protecting layer or layers such as a silicone or organic hard coat layer or/and a photocatalytic functional layer. If necessary, a primer layer may be provided between the substrate and laminate and/or between two neighboring layers of the laminate. Either the composition or the thickness of such an ultraviolet absorbing layer, surface protecting layer or primer layer is not particularly restricted.

The coat film formed of the pressure-sensitive adhesive composition of the present invention is characterized in that the deterioration in near-infrared absorbing capacity is slight and that the composition has stickiness. A favorable physical property of the coat film is evidenced by the fact that the decrease in near-infrared absorbing capacity of the near-infrared absorbing dye after light-proof testing is slight, namely the residual absorbing capacity is high. The absorbance of the film at the maximum absorption wavelength (maximum absorption wavelengths of near-infrared absorbing dyes: 780 to 1200 nm) after 96 hours of UV irradiation in the evaluation for deterioration of near-infrared absorbing dyes as mentioned below is preferably not less than 5%, more preferably not less than 50%, still more preferably not less than 85%, most preferably not less than 95%, of the initial value which is taken as 100%. The absorbance value after UV irradiation is a relative value with the initial value being taken as 100%.

(Near-infrared absorbing dye evaluation for deterioration)

The absorbance at the maximum absorption wavelength of the near-infrared absorbing dye is monitored after UV irradiation.

A pressure-sensitive adhesive layer is formed by applying, using an applicator, the pressure-sensitive adhesive composition onto a release film (silicone-treated PET film) to a dry thickness of 25 μm. The layer is dried at 100°C for 2 minutes. The adhesive layer is laminated with a 50-μm-thick or 100-μm-thick PET film (for transfer of the adhesive layer to this film). The release film is peeled off from the pressure-sensitive adhesive composition, which is then laminated with a 50-μm-thick PET film.

Using a spectrophotometer (product of Shimadzu Corp., trademark: UV-3100), the absorbance of the above film at the maximum absorption wavelength (maximum absorption wavelengths of near-infrared absorbing dyes: 780 to 1200 nm) is measured. The above-mentioned film is subjected to UV irradiation using an ultraviolet auto fade meter (product of Suga Test Instruments Co., Ltd. trademark: FAL-AU-B). Using a spectrophotometer (product of Shimadzu Corp., trademark: UV-3100), absorbance measurements are carried out at the maximum absorption wavelength of the film (maximum absorption wavelengths of near-infrared absorbing dyes: 780 to 1200 nm) at intervals of 48 hours of UV irradiation. Relative absorbance values are recorded, with the initial value being taken as 100. Values closer to 100% indicate better results without substantial deterioration of the dye.

The coat film or film formed of the pressure-sensitive adhesive composition of the present invention or the laminate comprising that coat film or film as an adhesive layer preferably has an improved transparency. Thus, for example, it preferably has a haze value of not more than 3.0%, more preferably not more than 2.0%, still more preferably not more than 1.0%.

While the pressure-sensitive adhesive composition of the present invention can be widely used for general cohesion purposes, it is preferably used as a material for forming adhesive layers in electronic apparatus or devices such as plasma displays.

When such pressure-sensitive adhesive composition functions as an adhesive layer and, at the same time as a near-infrared absorbing layer, the layer structure of plasma displays and the like can be simplified and the emission of near-infrared rays or the like from the screen can be suppressed.

As a preferred embodiment of the present invention, there may be mentioned an optical filter for a plasma display forming a plasma display front face plate whose filter being formed by using the above-mentioned pressure-sensitive adhesive composition, namely an optical filter for a plasma display which comprises the above-mentioned pressure-sensitive adhesive composition. Further, there may be mentioned a plasma display which comprises the above-mentioned pressure-sensitive adhesive composition. A preferred form of such plasma display is a plasma display comprising the above-mentioned plasma display optical filter as an essential constituent.

In such plasma display optical filter or plasma display, the adhesive layer formed of the pressure-sensitive adhesive composition of the present invention is capable of absorbing near-infrared rays as well as ultraviolet rays and, when a color tone adjusting agent is added, the layer can serve also as a material having a color tone adjusting function. Therefore, it becomes possible to integrate the functions of the respective layers constituting the front face plate of the plasma display and thus it becomes possible to accomplish the reduction in number of layers in the front face plate for the purpose of cost reduction. Such plasma display optical filter and plasma display also constitute an aspect of the present invention.

The pressure-sensitive adhesive composition of the present invention, which has the constitution described hereinabove, allows slight deterioration of the near-infrared absorbing dye caused by ultraviolet rays and, therefore, is suited for use in forming adhesive layers for sticking together laminar materials constituting plasma displays and the like, making it possible to integrate the functions of the respective layers in the front face plate of the plasma display into the adhesive layer; the adhesive layer thus serves as a material capable of absorbing near-infrared rays as well as ultraviolet rays and further can have a color tone adjusting function. As a result, it becomes possible to attain the reduction in number of layers in the front face plate for the purpose of cost reduction while satisfying the fundamental performance characteristics required for plasma displays and so on.

BEST MODES FOR CARRYING OUT THE INVENTION

The following examples illustrate the present invention in more detail. They are, however, by no means limitative of the scope of the present invention. Unless otherwise specified, "part(s)" means "part(s) by weight".

Synthesis Example 1 (Dropwise monomer polymerization method)

358.2 g of 2-ethylhexyl acrylate (2EHA), 240 g of cyclohexyl methacrylate (CHMA), and 1.8 g of 2-hydroxyethyl acrylate (HEA) were weighed and thoroughly mixed up (the resulting mixture is hereinafter referred to as "monomer mixture (A1)"). A 40% portion of the monomer mixture (A1) and 196.4 g of ethyl acetate were weighed and placed in a flask equipped with a thermometer, stirrer, inert gas inlet tube, reflux condenser and dropping funnel. The remaining 60% portion of the monomer mixture (A1), 16 g of ethyl acetate, and 0.72 g of the polymerization initiator Nyper BMTK 40 (trademark, product of NOF Corp.) were placed in the dropping funnel and thoroughly mixed up (this mixture is hereinafter referred to as "monomer mixture (B1)"). The flask inside temperature was raised to 85°C while appropriately

passing 20 mL/minute of nitrogen gas through the flask. 0.96 g of the polymerization initiator Nyper BMTK 40 (trademark, product of NOF Corp.) was charged into the flask and the reaction was initiated thereby.
Beginning 15 minutes after charging of the polymerization initiator, the monomer mixture (B1) was evenly added to the flask over 90 minutes to allow the reaction to proceed. Immediately after completion of addition of the monomer mixture (B1), 50 g of ethyl acetate was added. The maturation reaction was carried out at 80°C for 90 minutes. A mixed solution composed of 1.8 g of the polymerization initiator ABN-E (trademark, product of Japan Hydrazine Co, Inc.) and 39 g of ethyl acetate was added in five divided portions to the flask at 30-minute intervals (for residual monomer reaction). The maturation reaction was carried out at 80°C for 90 minutes, 575 g of toluene was added, and the reaction was finished. A pressure-sensitive adhesive polymer (A-1) was obtained.

Synthesis Example 2 (Batchwise monomer polymerization method)

209.1 g of 2EHA, 60 g of CHMA, 0.9 g of HEA, 30 g of RWA-93 (trademark, product of Otsuka Chemical Co., Ltd.), and 245 g of ethyl acetate were weighed and placed in a flask equipped with a thermometer, stirrer, inert gas inlet tube, reflux condenser and dropping funnel. The flask inside temperature was raised to 85°C while appropriately passing 20 mL/minute of nitrogen gas through the flask. 0.6 g of the polymerization initiator Nyper BMTK 40 (trademark, product of NOF Corp.) was charged into the flask and the reaction was initiated thereby. The reaction was carried out for 90 minutes. A mixed solution composed of 0.3 g of the polymerization initiator Nyper BMTK 40 (trademark, product of NOF Corp.) and 15 g of ethyl acetate was added in two divided portions to the flask at a 1-hour interval (for residual monomer reaction). The maturation reaction was carried out at 80°C for 150 minutes, 155 g of toluene was added, and the reaction was finished. A pressure-sensitive adhesive polymer (A-2) was obtained.

Synthesis Examples 3 to 5 (Batchwise monomer polymerization method)

A pressure-sensitive polymer (A-3), pressure-sensitive polymer (A-4) and pressure-sensitive polymer (A-5) were obtained in the same manner as in Synthesis Example 2 except that the respective monomer compositions specified in Table 1 were employed.

Synthesis Example 6 (Dropwise monomer polymerization method)

120 g of butyl acrylate (BA), 456 g of 2EHA, 6 g of stearyl acrylate (STA) and 18 g of HEA were weighed and thoroughly mixed up (this mixture is hereinafter referred to as "monomer mixture (A2)"). A 40% portion of the monomer mixture (A2) and 293.3 g of ethyl acetate were weighed and placed in a flask equipped with a thermometer, stirrer, inert gas inlet tube, reflux condenser and dropping funnel. The remaining 60% portion of the monomer mixture (A2), 10 g of ethyl acetate, 60 g of toluene, and 0.36 g of the polymerization initiator Nyper BMTK 40 (trademark, product of NOF Corp.) were placed in the dropping funnel and thoroughly mixed up (this mixture is hereinafter referred to as "monomer mixture (B2)"). The flask inside temperature was raised to 85°C while appropriately passing 20 mL/minute of nitrogen gas through the flask. 0.48 g of the polymerization initiator Nyper BMTK 40 (trademark, product of NOF Corp.) was charged into the flask and the reaction was initiated thereby. 10 minutes after charging of the polymerization initiator, the monomer mixture (B2) was evenly added to the flask over 60 minutes to allow the reaction to proceed. Immediately after completion of addition of the monomer mixture (B2), 6 g of ethyl acetate and 52.4 g of toluene were added. The maturation reaction was carried out at 86°C for 90 minutes. A mixed solution composed of 0.6 g of the polymerization initiator Nyper BMTK 40 (trademark, product of NOF Corp.) and 30 g of toluene was added in two divided portions to the flask at a 1-hour interval (for residual monomer reaction). The maturation reaction was carried out at 86°C for 90 minutes, 318.5 g of ethyl acetate and 423.4 g of toluene were added, and the reaction was finished. Finally, a mixed solution composed of 0.15 g of the crosslinking promoter di-n-butyltin dilaurate, 3 g of acetic acid and 25 g of toluene was added, followed by thorough mixing to give a pressure-sensitive adhesive polymer (A-6).

Synthesis Example 7 (Dropwise monomer polymerization method)

275.5 g of BA, 136.8 g of 2EHA, 36 g of acrylic acid (AA), 149.9 g of vinyl acetate (VAC), and 1.8 g of HEA were weighed and thoroughly mixed up (this mixture is hereinafter referred to as "monomer mixture (A3)"). A 33% portion of the monomer mixture (A3), 312.9 g of ethyl acetate and 3.3 g of toluene were weighed and placed in a flask equipped with a thermometer, stirrer, inert gas inlet tube, reflux condenser and dropping funnel. The remaining 67% of the monomer mixture (A3), 139.9 of ethyl acetate and 0.79 g of the polymerization initiator ABN-E (trademark, product of Japan Hydrazine Co., Inc.) were placed in the dropping funnel and thoroughly mixed up (this mixture is hereinafter referred to as "monomer mixture (B3)"). The flask inside temperature was raised to 82°C while appropriately passing 20 mL/minute of nitrogen gas through the flask. 0.79 g of the polymerization initiator Nyper BMTK 40 (trademark,

product of NOF Corp.) was charged into the flask and the reaction was initiated thereby. 15 minutes after charging of the polymerization initiator, the monomer mixture (B3) was evenly added to the flask over 90 minutes to allow the reaction to proceed. Immediately after completion of addition of the monomer mixture (B3), 151.2 g of toluene was added. The maturation reaction was carried out at 80°C for 90 minutes. 182.9 g of toluene was added. Then, a mixed solution composed of 1.8 g of the polymerization initiator ABN-R (trademark, product of Japan Hydrazine Co., Inc.) and 23.4 g of toluene was added in five divided portions to the flask at 30-minute intervals (for residual monomer reaction). The maturation reaction was carried out at 80°C for 90 minutes, 164.4 g of toluene was added, and the reaction was finished. A pressure-sensitive adhesive polymer (A-7) was obtained.

Table.1

| | | Synthesis Example 1 | Synthesis Example 2 | Synthesis Example 3 | Synthesis Example 4 | Synthesis Example 5 | Synthesis Example 6 | Synthesis Example 7 |
|---|---|---|---|---|---|---|---|---|
| Polymerization method | | Dropwise | Batchwise | Batchwise | Batchwise | Batchwise | Dropwise | Dropwise |
| Composition of pressure-sensitive polymer A (parts) | BA | - | - | - | - | - | 20 | 45.9 |
| | 2EHA | 59.7 | 69.7 | 69.7 | 69.7 | 89.7 | 76 | 22.8 |
| | CHMA | 40 | 20 | 15 | 10 | - | - | - |
| | HEA | 0.3 | 0.3 | 0.3 | 0.3 | 0.3 | 3 | 0.3 |
| | RUVA | - | 10 | 15 | 20 | 10 | - | - |
| | VAC | - | - | - | - | - | - | 25 |
| | AA | - | - | - | - | - | - | 6 |
| | STA | - | - | - | - | - | 1 | - |
| Tg(°C) | | -31 | -41 | -40 | -41 | -60 | -66 | -36 |
| Mw | | $29 \times 10^4$ | $45 \times 10^4$ | $54 \times 10^4$ | $56 \times 10^4$ | $48 \times 10^4$ | $45 \times 10^4$ | |
| Nonvolatile matter(%) | | 40.6 | 39.1 | 38.7 | 38.3 | 40.4 | 32.5 | 34.8 |
| Viscosity(mPa·s) | | 1590 | 1370 | 1580 | 1520 | 930 | 390 | 6040 |
| Hydroxyl value (KOH mg/g) | | 1.5 | 1.5 | 1.5 | 1.5 | 1.5 | 15 | 1.5 |
| Acid value (KOH mg/g) | | 0 | 0 | 0 | 0 | 0 | 0 | 47 |

Remarks are made referring to Table 1. BA stands for butyl acrylate, 2EHA for 2-ethylhexyl acrylate, CHMA for cyclohexyl methacrylate, HEA for 2-hydroxyethyl acrylate, RUVA for RUVA-93 (trademark, product of Otsuka Chemical Co., Ltd.), VAC for vinyl acetate, AA for acrylic acid and STA for stearyl acrylate.
Tg is the value calculated based on the Tg values for the respective homopolymers. The following values were used as the homopolymer Tg values: BA: -55°C, 2EHA: -70°C, CHMA: 66°C, HEA: -15°C, RUVA: 100°C, VAC: 25°C, AA: 106°C and STA: -70°C.
The hydroxyl value and acid value are the values per one gram of the polymer solid.

Example 1

0.2 g of the near-infrared absorbing dye IR-12 (product of Nippon Shokubai Co., Ltd., trademark: EX Color), 0.49 g of the ultraviolet absorber TINUVIN 234 (trademark, product of Ciba Specialty Chemicals K.K.), and toluene were added to 22.93 g of the pressure-sensitive adhesive polymer (A-1) solution (nonvolatile matter (NV) 40.6%). The amount of toluene was 2 g (amount to render the theoretical nonvolatile matter content 39%). The mixture was stirred using a paint shaker until a homogeneous solution was formed; a resin solution was thus prepared. The maximum absorption wavelength (λmax) of IR-12 was 885 nm (toluene solution) .
A pressure-sensitive adhesive layer was formed by applying, using an applicator, the above resin solution to a release film (silicone-treated PET film) so as to give a dry thickness of 25 μm. This was dried at 100°C for 2 minutes. The pressure-sensitive adhesive layer was laminated with a 50-μm-thick or 100-μm-thick PET film (for transfer of the pressure-sensitive adhesive layer to this film). The thus-obtained adhesive sample was evaluated for stickiness and appearance and for near-infrared absorbing dye deterioration by the methods mentioned below. The results are shown in Table 2.

Examples 2 to 10 and Comparative Example 1

The procedure of Example 1 was followed in the same manner except that the resin solutions were prepared according to the formulations specified in Tables 2 to 4. The results obtained are shown in Tables 2 to 4.

Examples 11 to 25

The procedure of Example 1 was followed in the same manner except that the resin solutions were prepared according to the formulations specified in Tables 2 and 3. Then, 1.0 part of the isocyanate crosslinking agent Coronate L-55E (trademark, product of Nippon Polyurethane Industry Co., Ltd.) was mixed relative to 100 parts of each resin solution, followed by thorough mixing. In this case, the pressure-sensitive cohesive samples were subjected to evaluation tests after at least one week of maturation at room temperature. The results are shown in Tables 2 and 3.

(Stickiness evaluation)

The release film was peeled off from each pressure-sensitive cohesive sample, and the pressure-sensitive adhesive layer was evaluated by touching with a fingertip. When it was felt sticky, it was evaluated as sticky (O) and, when it was not sticky at all, as not sticky (X).

(Appearance evaluation)

The pressure-sensitive cohesive samples prepared in the above manner were each observed by eye. When the sample had transparency, it was evaluated as good (O) and, when there was no transparency (turbidity and/or spot and other foreign matter formation) as poor (X).

(Near-infrared absorbing dye deterioration evaluation)

The absorbance at the maximum absorption wavelength of the near-infrared absorbing dye was monitored after UV irradiation.
The release film was peeled off from each cohesive sample, which was then laminated with a 50-μm-thick PET film. Using a spectrophotometer (product of Shimadzu Corp., trademark: UV-3100), the absorbance of the above-mentioned film at the maximum absorption wavelength (maximum absorption wavelengths of near-infrared absorbing dyes: 780 to 1200 nm) was measured.
The above-mentioned film was subjected to UV irradiation using an ultraviolet auto fade meter (product of Suga Test Instruments Co., Ltd., trademark: FAL-AU-B). Using a spectrophotometer (product of Shimadzu Corp., trademark: UV-3100), absorbance measurements were carried out at the maximum absorption wavelength of the film (maximum absorption wavelengths of near-infrared absorbing dyes: 780 to 1200 nm) at intervals of 48 hours of UV irradiation. Relative absorbance values were recorded, with the initial value being taken as 100. Values closer to 100% indicate better results without substantial deterioration of the dye.

Table 2

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Composition (parts) | Pressure-sensitive polymer A | A-1 | 93. 1 | 93. 1 | 93. 1 | 88. 2 | 79. 2 | 79. 2 | 59. 4 | 77. 2 | 74. 2 | 69. 3 | — |
| | | A-2 | — | — | — | — | — | — | — | — | — | — | 81. 2 |
| | | A-3 | — | — | — | — | — | — | — | — | — | — | — |
| | | A-4 | — | — | — | — | — | — | — | — | — | — | — |
| | | A-5 | — | — | — | — | — | — | — | — | — | — | — |
| | | A-6 | — | — | — | — | — | — | — | — | — | — | — |
| | | A-7 | — | — | — | — | — | — | — | — | — | — | — |
| | Near-infrared absorbing dye B | IR12 | 2 | 2 | 2 | 2 | 1 | 1 | 1 | 1 | 1 | 1 | 1 |
| | Ultraviolet absorber C | TINUVIN 234 | 4. 9 | — | — | — | 19. 8 | 9. 9 | 19. 8 | 19. 8 | 19. 8 | 19. 8 | 8. 9 |
| | | TINUVIN 384 | — | 4. 9 | — | 4. 9 | — | — | — | — | — | — | — |
| | Hindered amine light stabilizer d-1 | TINUVIN 765 | — | — | 4. 9 | 4. 9 | — | 9. 9 | 19. 8 | 2 | 5 | — | — |
| | Hindered amine light stabilizer d-2 | TINUVIN 144 | — | — | — | — | — | — | — | — | — | 9. 9 | 8. 9 |
| | Antioxidant E | Sumilizer BHT | — | — | — | — | — | — | — | — | — | — | — |
| | Total | | 100 | 100 | 100 | 100 | 100 | 100 | 100 | 100 | 100 | 100 | 100 |
| Percentage of residual absorbance of dye B after UV irradiation | | 0h | 100 | 100 | 100 | 100 | 100 | 100 | 100 | 100 | 100 | 100 | 100 |
| | | 48h | 34 | 31 | 47 | 58 | 51 | 65 | 54 | 93 | 83 | 93 | 96 |
| | | 96h | 9 | 5 | 17 | 37 | 14 | 39 | 34 | 89 | 73 | 89 | 92 |
| | | 480h | 0 | 0 | 0 | 0 | 0 | 0 | 0 | 40 | 17 | 63 | |
| Stickiness | | | ○ | ○ | ○ | ○ | ○ | ○ | ○ | ○ | ○ | ○ | ○ |
| Appearance | | | ○ | ○ | ○ | ○ | ○ | ○ | ○ | ○ | ○ | ○ | ○ |

Table 3

| | | | Example 12 | Example 13 | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|---|---|
| Composition (parts) | Pressure-sensitive polymer A | A-1 | — | — | — | — | — | 82. 5 | 70. 8 | 69. 8 | — | — | — | — | — | — |
| | | A-2 | — | — | — | — | — | — | — | — | 98. 5 | 98. 0 | 97. 0 | — | — | — |
| | | A-3 | 86. 4 | — | — | — | — | — | — | — | — | — | — | 98. 1 | — | — |
| | | A-4 | — | 91. 1 | — | — | — | — | — | — | — | — | — | — | 98. 2 | — |
| | | A-5 | — | — | 81. 2 | — | — | — | — | — | — | — | — | — | — | 98. 1 |
| | | A-6 | — | — | — | 69. 3 | — | — | — | — | — | — | — | — | — | — |
| | | A-7 | — | — | — | — | 69. 3 | — | — | — | — | — | — | — | — | — |
| | Near-infrared absorbing dye B | IR12 | 1 | 1 | 1 | 1 | 1 | 1 | 1 | 1 | 1 | 1 | 1 | 1 | 1 | 1 |
| | Ultraviolet absorber C | TINUVIN 234 | 4. 2 | — | 8. 9 | 19. 8 | 19. 8 | — | 14. 1 | 13. 9 | — | — | — | — | — | — |
| | | TINUVIN 384 | — | — | — | — | — | — | — | — | — | — | — | — | — | — |
| | Hindered amine light stabilizer d-1 | TINUVIN 765 | — | — | — | — | — | — | — | 1. 4 | — | — | — | — | — | — |
| | Hindered amine light stabilizer d-2 | TINUVIN 144 | 8. 4 | 7. 9 | 8. 9 | 9. 9 | 9. 9 | — | — | — | 0. 5 | 1. 0 | 2. 0 | 0. 9 | 0. 8 | 0. 9 |
| | Antioxidant E | Sumilizer BHT | — | — | — | — | — | 16. 5 | 14. 1 | 13. 9 | — | — | — | — | — | — |
| | Total | | 100 | 100 | 100 | 100 | 100 | 100 | 100 | 100 | 100 | 100 | 100 | 100 | 100 | 100 |
| Percentage of residual absorbance of dye B after UV irradiation | | 0h | 100 | 100 | 100 | 100 | 100 | 100 | 100 | 100 | 100 | 100 | 100 | 100 | 100 | 100 |
| | | 48h | 97 | 96 | 97 | 118 | 70 | 92 | 96 | 96 | 97 | 96 | 96 | 97 | 97 | 97 |
| | | 96h | 92 | 92 | 94 | 114 | 51 | 65 | 91 | 92 | 94 | 94 | 93 | 95 | 96 | 96 |
| | | 480h | | | | | | 0 | 10 | 38 | | | | | | |
| Stickiness | | | ○ | ○ | ○ | × | × | ○ | ○ | ○ | ○ | ○ | ○ | ○ | ○ | ○ |
| Appearance | | | ○ | ○ | ○ | × | × | ○ | ○ | ○ | ○ | ○ | ○ | ○ | ○ | ○ |

Table 4

| | | | Comparative Example 1 |
|---|---|---|---|
| Composition (parts) | Pressure-sensitive polymer A | A-1 | 99 |
| | | A-2 | - |
| | | A-3 | - |
| | | A-4 | - |
| | | A-5 | - |
| | | A-6 | - |
| | | A-7 | - |
| | Near-infrared absorbing dye B | IR12 | 1 |
| | Ultraviolet Ultraviolet absorber C | TINUVIN 234 | - |
| | | TINUVIN 384 | - |
| | Hindered amine light stabilizer d-1 | TINUVIN 765 | - |
| | Hindered amine light stabilizer d-2 | TINUVIN 144 | - |
| | Antioxidant E | Sumilizer BHT | - |
| | Total | | 100 |
| Percentage of residual absorbance of dye B after UV irradiation | | 0h | 100 |
| | | 48h | 4 |
| | | 96h | 0 |
| | | 480h | - |
| Stickiness | | | O |
| Appearance | | | O |

Remarks are made concerning Tables 2 to 4. As for the near-infrared absorbing dye B, IR12 is a near-infrared absorbing dye (trademark: EX Color) produced by Nippon Shokubai Co., Ltd. As regards the ultraviolet absorber C, TINUVIN 234 and TINUVIN 384 (both trademarks) are ultraviolet absorbers produced by Ciba Specialty Chemicals K. K. As for the hindered amine light stabilizer d-1 and hindered amine light stabilizer d-2, TINUVIN 765 and TINUVIN 144 (both trademarks) are light stabilizers produced by Ciba Specialty Chemicals K.K. As regards the antioxidant E, BHT (trademark) is a hindered phenol antioxidant produced by Sumitomo Chemical Co., Ltd.

## Claims

1. A pressure-sensitive adhesive composition
which comprises a pressure-sensitive adhesive polymer (A), a near-infrared absorbing dye (B), an ultraviolet absorber (C) and/or a hindered amine light stabilizer (D).

2. The pressure-sensitive adhesive composition according to Claim 1
which further comprises an antioxidant (E).

3. The pressure-sensitive adhesive composition according to Claim 1 or 2,
wherein the pressure-sensitive adhesive polymer (A) has a glass transition temperature of -80 to -20°C.

4. The pressure-sensitive adhesive composition according to Claim 1, 2 or 3,
wherein the pressure-sensitive adhesive polymer (A) has a weight average molecular weight of not less than 250,000.

**5.** A plasma display optical filter or a plasma display which comprises the pressure-sensitive adhesive composition according to Claim 1, 2, 3 or 4.

European Patent Office

# EUROPEAN SEARCH REPORT

Application Number
EP 04 29 1362

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 0185, no. 26 (M-1683), 5 October 1994 (1994-10-05) & JP 6 183138 A (FUJI PHOTO FILM CO LTD), 5 July 1994 (1994-07-05) * abstract * ----- | 1 | C09J11/06 |
| | | | TECHNICAL FIELDS SEARCHED (Int.Cl.7) |
| | | | C09J |

1

The present search report has been drawn up for all claims

| Place of search | Date of completion of the search | Examiner |
|---|---|---|
| The Hague | 29 September 2004 | Oudot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 29 1362

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2004

| Patent document cited in search report | Publication date | Patent family member(s) | Publication date |
|---|---|---|---|
| JP 6183138 A | 05-07-1994 | NONE | |

EPO FORM P0459

For more details about this annex : see Official Journal of the European Patent Office, No. 12/82